# EUROPEAN PATENT APPLICATION

(11) **EP 4 592 579 A1**
(43) Date of publication of application: **30.07.2025**
(21) Application number: 22959114.4
(22) Date of filing: 21.09.2022
(51) Int. Cl.: F16M 13/04, F16M 11/04, G05D 3/00

(54) **GIMBAL, GIMBAL CONTROL METHOD AND DEVICE, AND STORAGE MEDIUM**

(71) Applicant: SZ DJI Technology Co., Ltd., Shenzhen, Guangdong 518057 (CN)
(72) Inventor: ZHANG, Hongji, Shenzhen, Guangdong 518057 (CN); XIE, Wenlin, Shenzhen, Guangdong 518057 (CN); CHEN, Chuanwei, Shenzhen, Guangdong 518057 (CN); ZENG, Dehao, Shenzhen, Guangdong 518057 (CN); LOU, Zhiyuan, Shenzhen, Guangdong 518057 (CN)
(74) Representative: Appelt, Christian W.
(86) International application number: PCT/CN2022/120372
(87) International publication number: WO 2024/060104

(57) **Abstract**

A gimbal, a gimbal control method and device, and a storage medium. The gimbal includes: a first assembly; a second assembly mechanically coupled to the first assembly; and non-contact sensor(s) arranged at the first assembly and/or the second assembly. The non-contact sensor(s) are used to output a sensing signal such that the gimbal is able to perform a corresponding control operation according to the sensing signal when the relative position of the first assembly and the second assembly changes. The control operation includes any one of a power-on operation or a power-off operation. The gimbal can improve the user experience during the use of the gimbal.

## Description

### TECHNICAL FIELD

The present disclosure generally relates to the field of gimbal technologies and, more particularly, to a gimbal, a control method and device of a gimbal, and a storage medium.

### BACKGROUND

A gimbal generally refers to a device for carrying or fixing a load, which is used to support and stabilize the load. Further, the gimbal is able to rotate to adjust the direction of the load. The load can be a terminal device such as a mobile phone, a camera, or a camcorder. Users can adjust a photographing angle and perform related photographing operations by installing a terminal device such as a mobile phone on the gimbal.

At present, the user experience of the gimbal during use still needs to be improved.

### SUMMARY

To solve the problem of poor user experience during use of a gimbal, the embodiments of the present disclosure provide a gimbal, a control method and a control device of a gimbal, and a storage medium.

In a first aspect, the present disclosure provides a gimbal. The gimbal includes: a first assembly; a second assembly mechanically coupled to the first assembly; and non-contact sensor(s) arranged at the first assembly and/or the second assembly. The non-contact sensor(s) are used to output a sensing signal such that the gimbal is able to perform a corresponding control operation according to the sensing signal when the relative position of the first assembly and the second assembly changes. The control operation includes any one of a power-on operation or a power-off operation.

In a second aspect, the present disclosure provides a control method of a gimbal. The gimbal includes a first assembly and a second assembly mechanically coupled to each other. The method includes: obtaining a sensing signal of non-contact sensor(s) arranged at the first assembly and/or arranged at the second assembly; and performing a preset control operation according to the sensing signal such that the gimbal is able to perform a corresponding response when the relative position of the first assembly and the second assembly changes. The control operation includes any one of a power-on operation or a power-off operation.

In a third aspect, the present disclosure provides a gimbal. The gimbal includes a first assembly and a second assembly mechanically coupled to each other. The gimbal further includes a memory and a processor. The memory is used to store a computer program. The processor is used to execute the computer program and implement the method described in the second aspect when executing the computer program.

In a fourth aspect, the present disclosure provides a control method of a gimbal. The gimbal includes a base and a shaft arm assembly. The shaft arm assembly is connected to the base and is used to carry a load. The shaft arm assembly includes at least one shaft arm, and the shaft arm is able to rotate around at least one axial direction relative to the base to adjust the pose of the load. The method includes: obtaining a movement state of the base of the gimbal; when the gimbal carries the load and the movement state of the base meets a first preset condition, entering a first photographing mode. The first preset condition includes that the pose of the base remains approximately unchanged; and when the gimbal is in the first photographing mode, a target shaft arm of the shaft arm assembly does not stabilize the load, and the target shaft arm is able to rotate from a first joint angle to a second joint angle, with a first degree of freedom, when subjected to an external force and remain at the second joint angle.

In a fifth aspect, the present disclosure provides a gimbal. The gimbal includes a base and a shaft arm assembly. The shaft arm assembly is connected to the base and is used to carry a load. The shaft arm assembly includes at least one shaft arm, and the shaft arm is able to rotate around at least one axial direction relative to the base to adjust the pose of the load. The gimbal also includes a memory and a processor. The memory is used to store a computer program; and the processor is used to execute the computer program to implement the control method according to the fourth aspect when executing the computer program.

In a sixth aspect, the present disclosure provides a control device of a gimbal. The gimbal includes a first assembly and a second assembly mechanically coupled to each other. The control device includes a memory and a processor. The memory is used to store a computer program. The processor is used to execute the computer program and implement the method described in the second aspect when executing the computer program.

In a seventh aspect, the present disclosure provides a control device of a gimbal. The gimbal includes a base and a shaft arm assembly. The shaft arm assembly is connected to the base and is used to carry a load. The shaft arm assembly includes at least one shaft arm, and the shaft arm is able to rotate around at least one axial direction relative to the base to adjust the pose of the load. The control device includes a memory and a processor. The memory is used to store a computer program; and the processor is used to execute the computer program to implement the control method according to the fourth aspect when executing the computer program.

In an eighth aspect, the present disclosure also provides a computer-readable storage medium. The computer-readable storage medium is configured to store a computer program. When the computer program is executed by a processor, the processor is configured to implement any control method of a gimbal provided by any embodiment of the present disclosure.

The embodiments of the present disclosure provide a gimbal, a control method and device of a gimbal, and a storage medium. The gimbal may be provided with non-contact sensor(s) at the first assembly or the second assembly. When the relative position of the mechanically coupled first assembly and the second assembly changes, the gimbal may perform the corresponding power-on or power-off control operation according to the sensing signal output by the non-contact sensor(s). Therefore, the user may automatically realize the power-on and power-off operation of the gimbal by only changing the relative position of the first assembly and the second assembly, which improves the convenience of the user when performing the power-on and power-off operation, that is, improves the user's experience.

The gimbal may enter the first photographing mode through obtaining the movement state of the base of the gimbal and when the gimbal carries a load and the movement state of the base remains roughly unchanged. In the first photographing mode, the target shaft arm of the shaft arm assembly may cancel the stabilization of the load to improve the adjustable angle range of the target shaft arm. At the same time, the target shaft arm may rotate from the first joint angle to the second joint angle when subjected to an external force, and may be maintained at the second joint angle. Therefore, the user may be allowed to rotate the target shaft arm in a larger angle range such that the load is maintained at a suitable photographing angle, which improves the user's freedom in the process of photographing with the gimbal, that is, improves the user's experience.

The above general description and the following detailed description are only examples and illustrative, and do not limit the scope of the present disclosure.

### BRIEF DESCRIPTION OF THE DRAWINGS

To more clearly illustrate the technical solutions of the embodiments of the present disclosure, the drawings needed for use in the description of the embodiments will be briefly introduced below. Obviously, the drawings described below are some embodiments of the present disclosure. For those ordinary in the art, other drawings can be obtained based on these drawings without any creative work.
FIG. 1 is a schematic structural diagram of a gimbal consistent with embodiments of the present disclosure.
FIG. 2 is a partial structural perspective view of a gimbal consistent with embodiments of the present disclosure.
FIG. 3 is a schematic structural diagram of another gimbal consistent with embodiments of the present disclosure.
FIG. 4 is a schematic structural diagram of a gimbal assembly consistent with embodiments of the present disclosure.
FIG. 5 is a partial structural perspective view of another gimbal consistent with embodiments of the present disclosure.
FIG. 6 is a schematic diagram showing principle of a magnetic induction sensor consistent with embodiments of the present disclosure.
FIG. 7 is a partially enlarged diagram of FIG. 2.
FIG. 8 is a schematic structural diagram of another gimbal consistent with embodiments of the present disclosure.
FIG. 9 is a flowchart of a gimbal control method consistent with embodiments of the present disclosure.
FIG. 10 is a flowchart of another gimbal control method consistent with embodiments of the present disclosure.
FIG. 11 is a schematic diagram of a gimbal carrying a load, consistent with embodiments of the present disclosure.
FIG. 12 is another schematic diagram of a gimbal carrying a load, consistent with embodiments of the present disclosure.
FIG. 13 is another schematic diagram of a gimbal carrying a load, consistent with embodiments of the present disclosure.
FIG. 14 is a schematic structural diagram of a control device consistent with the present disclosure.

### DETAILED DESCRIPTION OF THE EMBODIMENTS

The technical solution in the embodiments of the present disclosure will be clearly and completely described below in conjunction with the drawings in the embodiments of the present disclosure. Obviously, the described embodiments are part of the embodiments of the present application, not all of the embodiments. Based on the embodiments in the present disclosure, all other embodiments obtained by those skilled in the art without creative work are within the scope and protection of the present disclosure.

Unless otherwise defined, all technical and scientific terms used herein have the same meaning as those commonly understood by those skilled in the art to which the present disclosure belongs. The terms used herein in the specification of the present disclosure are only for the purpose of describing specific embodiments and are not intended to limit the scope of the present disclosure.

The term "including" used throughout the specification and claims is an openended phrase and should be interpreted as "including but not limited to." "Approximately" means that within an acceptable error range, and those skilled in the art can solve the technical problem within a certain error range and basically achieve the technical effect.

In addition, the word "connection" includes any direct and indirect connection means. Therefore, if a first device is described as being connected to a second device, it means that the first device can be directly connected to the second device, or indirectly connected to the second device through other devices.

It should be understood that the terms "and/or," "or/and" used in the present disclosure are only a description of the association relationship of the associated objects, indicating that there can be three relationships. For example, "A1 and/or B1" can represent that, A1 exists alone, A1 and B1 exist at the same time, and B1 exists alone. In addition, the character "/" in the present disclosure generally indicates that the associated objects before and after are in an "or" relationship.

It should be understood that the flowcharts shown in the accompanying drawings are only examples, and do not necessarily include all the content and operations/steps, nor do they have to be executed in the order described. For example, some operations/steps can also be decomposed, combined or partially merged, so the actual execution order may change according to the actual situation.

Some embodiments of the present application will be described in detail below in conjunction with the accompanying drawings. In the absence of contradiction, those skilled in the art can combine the different embodiments or examples described in this specification and the features of different embodiments or examples.

A gimbal generally refers to a device used to carry or fix a load. The load may be a terminal device such as a mobile phone, a camera, or a camcorder. Users can perform related photographing operations by installing a terminal device such as a mobile phone on the gimbal.

At present, the user experience problem of the gimbal during use still needs to be improved. For example, to improve portability, in some usage scenarios, the gimbal may have a foldable or deformable structure. The user needs to power off by pressing a button or other methods, to fold or deform the gimbal. After unfolding or deforming the gimbal, the gimbal may be powered on by pressing a button or other methods. It can be seen that when using a foldable or deformable gimbal, the user's power-on or power-off operations of the gimbal are cumbersome and inconvenient.

The present disclosure provides a gimbal, a gimbal control method, a gimbal control device, and a storage medium, to at least partially alleviate the above problems and improve the convenience of the user's power-on or power-off operations.

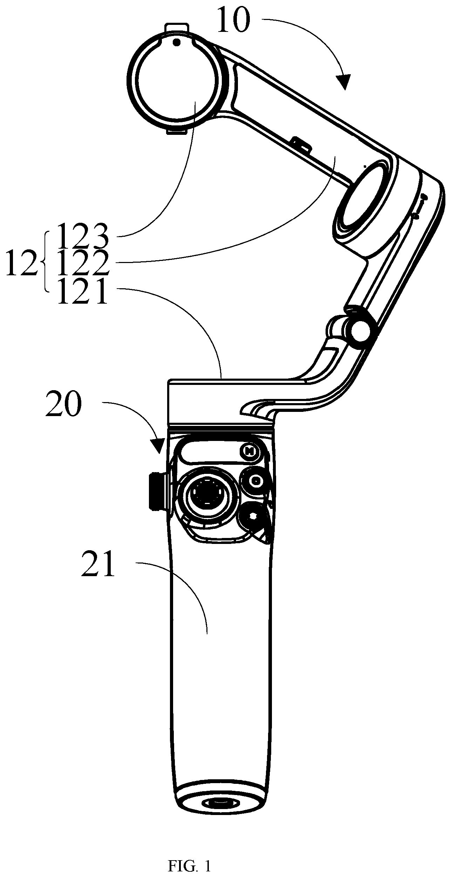

As shown in FIG. 1 to FIG. 8, the present disclosure provides a gimbal. The gimbal includes: a first assembly 10; a second assembly 20, which is mechanically coupled to the first assembly 10; and non-contact sensor(s) 30, which are arranged at the first assembly 10 or the second assembly 20. The non-contact sensor(s) 30 are used to output a sensing signal such that the gimbal is able to perform a corresponding control operation according to the sensing signal when the relative position of the first assembly 10 and the second assembly 20 changes. The control operation includes any one of a power-on operation or a power-off operation.

In one embodiment of the present disclosure, the first assembly 10 and the second assembly 20 may be different assemblies that are mechanically coupled to each other in the gimbal. The structures, shapes, and functions implemented by the first assembly 10 and the second assembly 20 may be the same or different, which may be set according to the specific application scenario.

For example, as shown in FIG. 1, in some embodiments, the gimbal may be a handheld gimbal, the first assembly 10 may include a gimbal assembly 12 that carries a load, and the second assembly 20 may include a grip 21 with a grip handle. In some other embodiments, the first assembly 10 and the second assembly 20 may also include shaft arms corresponding to different axial directions of the gimbal. For example, in one embodiment, the first assembly 10 may include a shaft arm corresponding to the yaw axis, and the second assembly 20 may include a shaft arm corresponding to the roll axis, etc. In some embodiments, the gimbal may have a foldable or deformable structure, and the first assembly 10 and the second assembly 20 may respectively include assemblies connected to the foldable or deformable structure.

The mechanical coupling between the first assembly 10 and the second assembly 20 may be understood as the existence of a mechanical connection and/or mechanical interaction between the first assembly 10 and the second assembly 20. The mechanical connection may include, but is not limited to, rotational connection, movable connection, sliding connection, or abutments, etc., and may be specifically set according to actual needs.

The first assembly 10 and the second assembly 20 may interact with each other through the mechanical connection. It should be understood that in some embodiments, there may not be a direct connection relationship between the first assembly 10 and the second assembly 20, but the first assembly 10 and the second assembly 20 may be connected through a connection member such that there is a mutual mechanical effect between the two, which will not be detailed here.

In one embodiment of the present disclosure, a non-contact sensor 30 may be understood as a sensor that does not contact an object to be measured. The non-contact sensor 30 may include but is not limited to a magnetic induction sensor, an infrared sensor, a laser sensor, an ultrasonic sensor, a visual sensor, or a millimeter wave radar sensor, which may be specifically set according to the actual application scenario, and will not be listed one by one here.

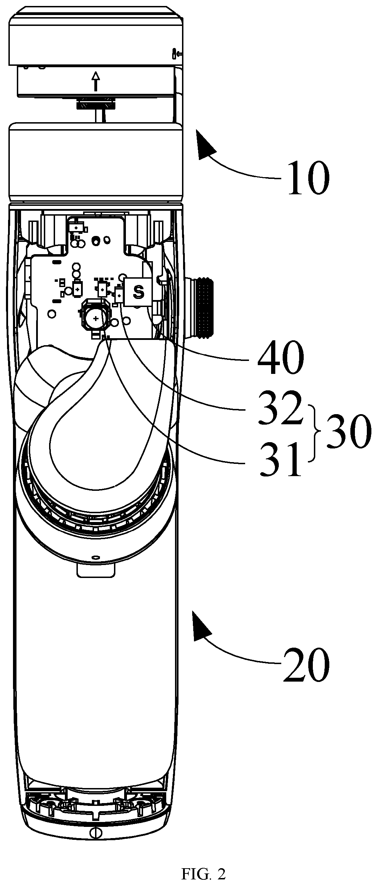

As shown in FIG. 2, the non-contact sensor 30 is arranged at the second assembly 20 and is able to sense the first assembly 10. Of course, in some other embodiments, there may be two non-contact sensors 30, which are arranged at the first assembly 10 and the second assembly 20, respectively.

Generally, the sensing signal in the embodiments of the present disclosure may be an electrical signal, specifically a digital signal or an analog signal. The sensing signal may indicate the relative position between the first assembly 10 and the second assembly 20, including but not limited to, the relative distance or the relative angular displacement. Of course, in some other embodiments, the sensing signal may also indicate the relative movement trend between the first assembly 10 and the second assembly 20, for example, the relative speed or the relative acceleration.

It should be understood that in some embodiments, the gimbal may be provided with a signal conditioning circuit, which amplifies, filters, and performs digital-to-analog conversion on the sensing signal of the non-contact sensor(s) 30, and finally outputs a signal for logical judgment. The gimbal may determine whether the relative position of the first assembly 10 and the second assembly 20 has changed based on the sensing signal. Or, the gimbal may determine the relative position of the first assembly 10 and the second assembly 20 based on the sensing signal.

In one embodiment of the present disclosure, the gimbal may also perform the control operation according to the sensing signal, such that the gimbal is able to respond accordingly when the relative position between the first assembly 10 and the second assembly 20 changes. It should be understood that the gimbal may choose whether to perform the corresponding control operation when the sensing signal indicates that the relative position of the first assembly 10 and the second assembly 20 has changed.

For example, as shown in FIG. 1, in some embodiments, the gimbal may perform the corresponding control operation when the relative position between the first assembly 10 and the second assembly 20 is a preset position or when the first assembly 10 and the second assembly 20 present a preset pose. In some embodiments, the gimbal may also perform the corresponding control operation when the relative distance between the first assembly 10 and the second assembly 20 is smaller than the preset distance, and/or the relative angle is smaller than the preset angle.

It should be noted that in some embodiments, the relative position change between a part of the first assembly 10 and a part of the second assembly 20 may also be understood as the relative position change between the first assembly 10 and the second assembly 20.

In one embodiment of the present disclosure, the power-on operation may be understood as the power-on operation performed on at least part of the electrical components of the gimbal. The power-on operation may be used to control a battery or an external power supply of the gimbal to supply power to at least some of the electrical components of the gimbal. After the power-on operation is performed, at least some of the electrical components of the gimbal may remain in a powered-on or powered state. In some embodiments, the power-off operation may be a turn-on operation of the gimbal.

Similarly, the power-off operation may be understood as a power-off operation performed on at least some of the electrical components of the gimbal. The power-off operation may be used to stop the battery or external power supply of the gimbal to supply power to at least some of the electrical components of the gimbal. After the power-off operation is performed, at least some of the electrical components of the gimbal may remain in a powered-off state. In some embodiments, the power-off operation may be a shutdown operation of the gimbal.

It can be understood that when performing the power-off operation, the gimbal may continue to supply power to the non-contact sensor(s) 30 to prevent the non-contact sensor(s) 30 from being unable to output the sensing signal used to enable the gimbal to perform the power-on operation due to power failure.

In the current embodiment of the present disclosure, the gimbal may be provided with the non-contact sensor(s) 30 on the first assembly 10 and/or the second assembly 20. When the relative position of the mechanically coupled first assembly 10 and the second assembly 20 changes, the gimbal may perform the corresponding power-on or power-off control operation according to the sensing signal output by the non-contact sensor(s) 30. In this way, the user may automatically realize the power-on and power-off operation of the gimbal by only changing the relative position of the first assembly 10 and the second assembly 20, which improves the convenience of the user when performing the power-on and power-off operation, that is, improves the user's experience.

Further, when a contact sensor is used, for example, when a pressure sensor is provided between the first assembly 10 and the second assembly 20, and the contact between the pressure sensor and the first assembly 10 and the second assembly 20 is used to determine whether the position of the first assembly 10 and the second assembly 20 has changed, this often has the problem of a small sensing range. At the same time, the contact sensor frequently contacts the object to be measured, which will cause mechanical loss and affect the service life of the gimbal.

By sensing using the non-contact sensor(s) 30, the mechanical loss caused by the contact sensor (such as the pressure sensor) when contacting the object to be measured may be avoided while improving the sensing range, thereby improving the service life of the gimbal.

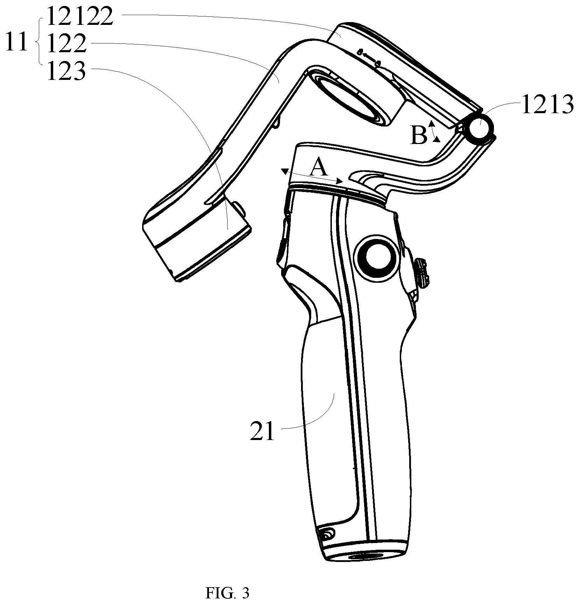

Optionally, as shown in FIG. 3, in some embodiments, the first assembly 10 may include a first member 11, and the first member 11 may rotate relative to the second assembly 20, with a first degree of freedom and a second degree of freedom. The first degree of freedom may correspond to a preset first rotation range. The first member 11 may rotate with the second degree of freedom at any angle within the first rotation range of the first degree of freedom relative to the second assembly 20, such that the relative position of the first member 11 and the second assembly 20 changes and the sensing signal changes. The sensing signal may be used to enable the gimbal to perform the control operation.

The first degree of freedom and the second degree of freedom may be understood as rotational degrees of freedom or spin degrees of freedom, for example, the range of rotation when the robotic arm rotates around a certain axial direction. In other words, when the first member 11 rotates with the first degree of freedom, it may be equivalent to the first member 11 rotating in the direction or axial direction corresponding to the first degree of freedom.

The first degree of freedom and the second degree of freedom may be degrees of freedom corresponding to rotation around different axes. It should be understood that the first degree of freedom may correspond to the axial direction of any shaft assembly of the pitch axis, roll axis, or yaw axis of the gimbal. The second degree of freedom may not correspond to the axis of the shaft assembly of the gimbal, but to other axes. In other words, the second degree of freedom may be a degree of freedom for rotating around an axial direction other than the axial direction corresponding to the first degree of freedom, that is, the first member 11 may rotate around at least two axial directions relative to the second assembly 20.

The first rotation range corresponding to the first degree of freedom may be a rotation range caused by mechanical limit or a rotation range controlled by the motor algorithm, which is not further limited here. When the first member 11 rotates with the first degree of freedom to any angle within the first rotation range, the first member 11 may further rotate with the second degree of freedom such that the relative position of the first member 11 and the second assembly 20 changes. Accordingly, the first member 11 may further rotate with the first degree of freedom during the process of rotating with the second degree of freedom.

For example, as shown in FIG. 3, the first degree of freedom of the first member 11 is a degree of freedom for rotating around the yaw axis, that is, the A direction as shown in the figure, and there is a preset first rotation range. The gimbal may also include a folding mechanism 1213, which is connected to the first member 11. The second degree of freedom is the B direction as shown in the figure. When the first member 11 is at any angle in the first rotation range corresponding to the first degree of freedom, it may rotate with the second degree of freedom through the folding mechanism 1213.

In this case, to avoid the first member 11 from being out of the sensing range of the non-contact sensor(s) 30 when rotating with the second degree of freedom at certain angles in the first rotation range corresponding to the first degree of freedom and resulting in failure to trigger the power-on and power-off operation or erroneous triggering of the power-on and power-off operation, the detection range of the non-contact sensor(s) 30 may include a plane. For example, in some embodiments, the non-contact sensor(s) 30 may be a magnetic induction sensor, which cooperates with a magnet for detection. Since the magnetic field generated by the magnet includes at least one plane area, the non-contact sensor(s) 30 may output a sensing signal when it is located in the magnetic field generated by the magnet. In some embodiments, the non-contact sensor(s) 30 may be arranged at the second assembly 20 and have an annular detection range, and the axial direction corresponding to the annular detection range may be the axial direction corresponding to the first degree of freedom. Therefore, when the first member 11 is located in the annular detection range of the non-contact sensor(s) 30, the non-contact sensor(s) 30 may output a sensing signal.

It should be noted that the sensing signal is used to enable the gimbal to perform the control operation, which may be understood as the gimbal may choose whether to perform the control operation based on the sensing signal.

Therefore, the first member 11 in the first assembly 10 of the gimbal may rotate with the second degree of freedom at any angle within the first rotation range corresponding to the first degree of freedom, such that the relative position between the first member 11 and the second assembly 20 changes. The non-contact sensor(s) 30 may output the sensing signal for the gimbal to perform the corresponding control operation in the process, reducing the situation where the gimbal mistakenly triggers the power-on and power-off operations or fails to trigger the power-on and power-off operations in the process of the user rotating the first member 11, with the first degree of freedom and the second degree of freedom, thereby improving the user's experience.

At the same time, this may allow the user to control the gimbal to perform the power-on or power-off operations with a larger degree of freedom of rotation, further improving the user's experience.

It should be understood that the first degree of freedom may be the degree of freedom of rotation around the roll axis, the degree of freedom of rotation around the pitch axis, or the degree of freedom of rotation around the yaw axis. It may be specifically set according to the axis sequence and structure of the gimbal.

Optionally, the gimbal may be a handheld gimbal with a handle.

As shown in FIG. 1 and FIG. 3, in some embodiments, the first assembly 10 may include a gimbal assembly 12, and the second assembly 20 may include a grip 21. The gimbal assembly 12 may be connected to the grip 21. The gimbal assembly 12 may include the first member 11. The gimbal assembly 12 may be connected to a load to stabilize the load. The grip 21 may be held by a user. The gimbal assembly 12 and the grip 21 may be rotatably connected such that the gimbal assembly 12 rotates relative to the grip 21 to change the direction of the load when the user holds the grip 21.

Exemplarily, as shown in FIG. 1, the first assembly 10 may include a gimbal assembly 12 as shown in FIG. 1, and the gimbal assembly 12 may include at least one axis component of a roll axis component, a pitch axis component, and a yaw axis component. Any axis component may include a motor and a shaft arm connected to the motor, and the motor may drive the shaft arm to rotate. The second assembly 20 may include a grip 21 as shown in FIG. 1, which may be a handle. When the user uses the gimbal, the grip 21 in the second assembly 20 may be held by the user, and the gimbal assembly 12 in the first assembly 10 may be used to connect the load. The shaft component of the gimbal assembly 12 may rotate or displace relative to the grip 21 to change the direction of the load.

The first member 11 may, as shown in FIG. 3, include a partial shaft arm of the yaw axis, a pitch axis motor, a pitch shaft arm, and a roll axis motor. When the shaft arm of the yaw axis rotates axially around the yaw axis, it may drive the first member 11 to rotate axially around the yaw axis. At this time, the first degree of freedom may be the degree of freedom of axial rotation around the yaw axis.

Optionally, the non-contact sensor(s) 30 may be arranged at the gimbal assembly 12 or the grip 21.

Specifically, in some embodiments, the non-contact sensor(s) 30 may be attached to the surface of any shaft arm of the gimbal assembly 12, or attached to the surface of the grip 21, to improve the sensing accuracy. In some other embodiments, the non-contact sensor(s) 30 may also be built into the shaft arm or the grip 21 of the gimbal assembly 12 to improve the aesthetics and space utilization.

Since the user often needs to hold the grip and rotate the gimbal assembly during the use of the gimbal, the position between the first member 11 and the second assembly 20 may change accordingly during this process. Therefore, by setting the first assembly 10 to include the gimbal assembly, the gimbal assembly to include the first member 11, and the second assembly 20 to include the grip, the user may more conveniently realize the power-on and power-off operation by changing the position of the first member 11 of the gimbal assembly relative to the grip during the use of the gimbal.

Optionally, the gimbal may include at least one shaft assembly.

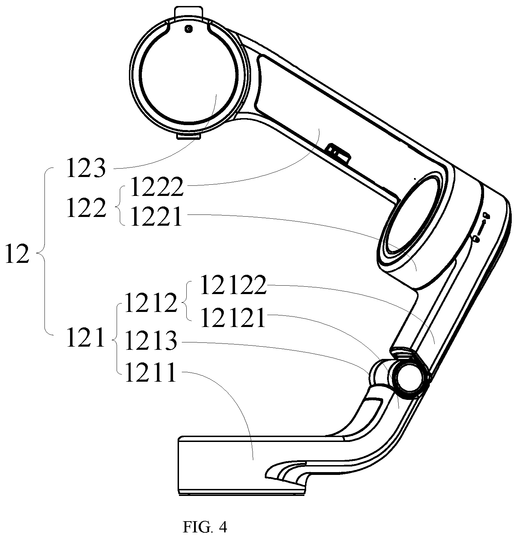

As shown in FIG. 4, in some embodiments, the gimbal assembly 12 may include a first shaft assembly 121, which is connected to the grip 21 and includes a first driver member 1211 and a first shaft arm 1212. The first shaft arm 1212 may be connected to the first driver member 1211 and may be driven by the first driver member 1211 to rotate around the first axial direction.

The first shaft assembly 121 may be a shaft assembly corresponding to a single-axis gimbal, or an assembly corresponding to any axis in a two-axis gimbal, or an assembly corresponding to any axis in a three-axis gimbal. The first axial direction may be any axial direction of the yaw axis, pitch axis, and roll axis of the gimbal, to realize the rotation of the shaft arm of the gimbal assembly 12 in the axial direction.

The first shaft assembly 121 may be connected to the grip 21. For example, as shown in FIG. 1 and FIG. 4 together, the first driver member 1211 may be connected to the grip 21 and the first shaft arm 1212, respectively. The first driver member 1211 may drive the first shaft arm 1212 to rotate around the first axial direction, thereby changing the relative position between the grip 21 and the first shaft arm 1212. The first driver member 1211 may be a motor. The base of the motor may be fixedly connected to the grip 21, and the rotation output end of the motor may be fixedly connected to the first shaft arm 1212 to drive the first shaft arm 1212 to rotate around the first axial direction.

Further, the first degree of freedom may be a degree of freedom of rotation around the first axial direction.

In some embodiments, the first member 11 may be connected to the first shaft arm, or include at least part of the first shaft arm. As shown in FIG. 3 and FIG. 4, in one embodiment, the first member 11 includes part of the shaft arm of the first shaft arm 1212, such that when the first shaft arm 1212 rotates around the first axial direction, the first member 11 may rotate with the first shaft arm 1212 with the first degree of freedom.

Optionally, the gimbal may have a folding mechanism 1213, and may be folded through the folding mechanism 1213.

As shown in FIG. 3, in some embodiments, a folding mechanism 1213 may be provided on the first shaft arm 1212, and the folding mechanism 1213 may enable the first member 11 to rotate with the second degree of freedom.

The first shaft arm 1212 may be folded through the folding mechanism 1213. Since the first member 11 is connected to the first shaft arm 1212 or includes at least part of the structure of the first shaft arm 1212, the first member 11 may rotate with the second degree of freedom during the folding of the first shaft arm 1212 by the folding mechanism 1213, to be sensed by the non-contact sensor(s) 30. The folding mechanism 1213 may include but is not limited to a rotation shaft mechanism, a hinge mechanism, or a slide rail mechanism. In some embodiments, the folding mechanism 1213 may be provided in the middle of the first shaft arm 1212, and respectively connect the two parts of the first shaft arm 1212.

Generally speaking, during the use of the gimbal with the folding mechanism 1213, the user needs to unfold the gimbal, turn it on by pressing the power button, fold it after use, and turn it off by pressing the power button. The process of rotating through the folding mechanism 1213 is regarded as the process of rotating with the second degree of freedom. The non-contact sensor(s) 30 may output the sensing signal for indicating the power-on and power-off operation in the process, such that the user is able to realize the power-on and power-off operation of the gimbal by only folding or unfolding the gimbal assembly, further improving the convenience of the user's power-on and power-off operation.

Specifically, as shown in FIG. 4, in some embodiments, the first shaft arm 1212 may include: a first sub-shaft arm 12121 connected to the first driver member 1211; a second sub-shaft arm 12122; and a folding mechanism 1213. The folding mechanism 1213 may be connected to the first sub-shaft arm 12121, and also may be connected to the second sub-shaft arm 12122, such that the second sub-shaft arm 12122 is able to rotate with the second degree of freedom. The first member 11 may include the second sub-shaft arm 12122.

When the first driver member 1211 drives the first sub-shaft arm 12121 to rotate, the first member 11 may be able to rotate with the first sub-shaft arm 12121, with the first degree of freedom, and may also rotate with the second degree of freedom through the folding mechanism 1213.

Further, the gimbal assembly may be a two-axis gimbal or a three-axis gimbal.

As shown in FIG. 4, in some embodiments, the gimbal assembly 12 may also include: a second shaft assembly 122, connected to the first shaft assembly 121 and including a second driver member 1221 and a second shaft arm 1222. The second shaft arm 1222 may be connected to the second driver member 1221, and may be driven by the second driver member 1221 to rotate around the second axial direction. And/or, the gimbal assembly may include a third shaft assembly 123, connected to the second shaft assembly 122 and including a third driver member. The third driver member may be able to rotate around a third axial direction.

In FIG. 4, one end of the first shaft arm 1212 may be connected to the first driver member 1211, and the other end may be connected to the second driver member 1221. One end of the second shaft arm 1222 may be connected to the second driver member 1221, and the other end may be connected to the third driver member. The third driver member may drive the load to rotate when rotating around the third axial direction. The third driver member may be directly connected to the load, or it may be connected to the load through a mounting bracket, and may be specifically set according to actual needs.

The second driver member and the third driver member may be similar to the first driver member, and may be motors, which will not be detailed here.

In the embodiments of the present disclosure, the axis sequence and structural arrangement of the gimbal may be set according to actual conditions.

In some embodiments, the first axial direction may be the yaw axis of the gimbal, the second axial direction may be the pitch axis of the gimbal, and the third axial direction may be the roll axis of the gimbal. As shown in FIG. 1, the gimbal in FIG. 1 is a three-axis gimbal, and the first shaft assembly 121 corresponding to the yaw axis, the second shaft assembly 122 corresponding to the pitch axis, and the third shaft assembly 123 corresponding to the roll axis are respectively arranged from the direction close to the handle to the direction away from the handle.

In some embodiments of the present disclosure, the number and type of the non-contact sensor(s) 30 may be set according to the actual situation.

In some embodiments, the non-contact sensor(s) 30 may include at least one of the following: an infrared sensor, a laser sensor, an ultrasonic sensor, a visual sensor, or a millimeter wave radar sensor.

The non-contact sensor(s) 30 may sense the object to be measured in a non-contact manner and output a sensing signal. Exemplarily, when the non-contact sensor(s) 30 include an infrared, laser, ultrasonic or millimeter wave radar sensor, the sensor may output the sensing signal according to the return time of the emitted light wave or sound wave. When the non-contact sensor(s) 30 include a visual sensor, the visual sensor may obtain image data of the object to be measured and output the sensing signal. The gimbal may determine the relative position between the object to be measured and the gimbal according to the output sensing signal.

For the non-contact sensor(s) 30, there may be a sensing element 40 paired with it. The gimbal may obtain the position of the sensing element 40 through the sensing signal of the non-contact sensor(s) 30 to determine the position of the object to be measured.

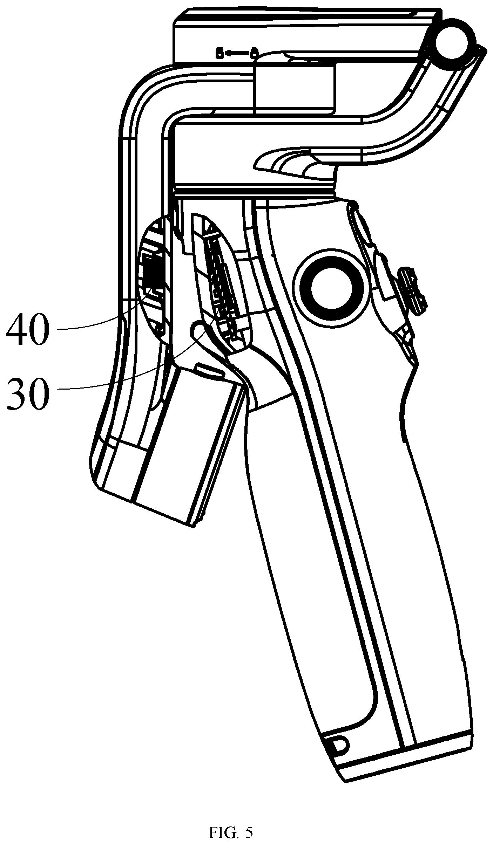

FIG. 5 is a perspective view of the partial structure of the gimbal. **In** some embodiments, the gimbal may also include a sensing element 40, and the non-contact sensor(s) 30 may be used to output the sensing signal according to the change of its relative position with the sensing element 40.

For example, in some embodiments, the non-contact sensor(s) 30 may include a magnetic induction sensor, and the sensing element 40 may be a magnet, or at least partially made of magnetic material. The magnetic induction sensor may output a sensing signal indicating the magnetic field strength of the sensing element 40. Since the magnetic field strength is generally larger at a position closer to the magnet, the gimbal may determine the relative position between the magnetic induction sensor and the sensing element 40 based on the sensing signal. Through the detection of the magnetic induction sensor and the magnet, it may effectively avoid the situation where the gimbal mistakenly triggers the power-on and power-off operation or fails to trigger the power-on and power-off operation when the user operates. The accuracy of the timing of the power-on and power-off operation may be improved.

The type of magnetic induction sensor may be set according to actual needs. In some embodiments, the magnetic induction sensor may include a Hall sensor and/or an anisotropic magnetoresistive (AMR) sensor. The magnetic signal may be converted into an electrical signal through a Hall element or a magnetoresistive element.

Of course, in other optional embodiments, the non-contact sensor(s) 30 may also be an infrared sensor, and the sensing element 40 may have a specific temperature. By detecting the sensing element 40 of a specific temperature, false triggering may be avoided and the sensing accuracy may be improved.

Optionally, the non-contact sensor(s) 30 may be provided at one of the first assembly 10 and the second assembly 20, and the sensing element 40 may be provided at the other of the first assembly 10 and the second assembly 20.

As shown in FIG. 5, in some embodiments, the non-contact sensor(s) 30 may be provided at the grip 21, and the sensing element 40 may be provided at the first member 11. For example, the sensing element 40 may be located inside the first member 11. When the first member 11 rotates relative to the grip 21, with the first degree of freedom, or rotates relative to the grip 21, with the second degree of freedom, the non-contact sensor(s) 30 may output a corresponding sensing signal, such that the gimbal performs a corresponding control operation according to the sensing signal.

Since the first member 11 may rotate with at least two degrees of freedom and has a large range of motion, to avoid being out of the sensing range of the non-contact sensor(s) 30, in some embodiments, the non-contact sensor(s) 30 may include an AMR sensor, and the gimbal may also include a sensing element 40 made of magnetic material.

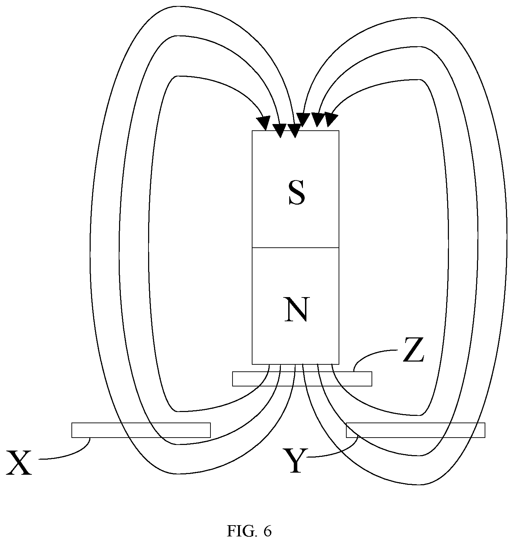

FIG. 6 shows the sensing principle of the anisotropic magnetoresistive AMR sensor. The external magnetic flux lines of the magnet are from the N pole to the S pole. For the AMR sensor set at X or Y, it may sense the magnetic field component of the magnet in the horizontal direction as shown in the figure. Therefore, in the process of the sensing element 40 moving around the AMR sensor, the AMR sensor may sense the corresponding horizontal magnetic field component and output the sensing signal according to the magnetic field component. In other words, the AMR sensor may be understood as a magnetic induction sensor in the plane/2D range.

Specifically, the AMR sensor usually includes four magnetoresistive elements. After a magnetic field is applied, the resistance values of different magnetoresistive elements change differently, resulting in a potential difference and forming a sensing signal.

It should be understood that the sensing element 40 may be made entirely of magnetic material or partially of magnetic material. In some embodiments, the sensing element 40 may include a magnet arranged inside one of the first assembly 10 and the second assembly 20. Of course, in other optional embodiments, the sensing element 40 may also be a part of the first assembly 10 or the second assembly 20, that is, the first assembly 10 or the second assembly 20 may be partially made of magnetic material.

Optionally, the gimbal may perform corresponding control operations according to the amplitude of the sensing signal.

In some embodiments, the gimbal may also include a processor, which may be used to perform at least one of the following: performing the power-on operation when the sensing signal is smaller than a first preset threshold, or performing the power-off operation when the sensing signal is larger than or equal to a second preset threshold.

For the sensing signal, it may usually be an analog electrical signal, such as a voltage value or a current value. The sensing signal may indicate corresponding information by its amplitude. Taking the Hall sensor as an example, when the magnetic field strength sensed by the Hall sensor is larger, the Hall voltage output by the Hall sensor may be larger, which represents that the distance between the measured object and the Hall sensor is smaller. Therefore, the gimbal may determine the amplitude of the sensing signal through the processor to determine the distance between the sensor and the measured object.

For example, as shown in FIG. 3, the first member 11 in FIG. 3 may be folded or unfolded relative to the grip 21 along the B direction. When the sensing signal is smaller than the first preset threshold, it may mean that the distance between the first member 11 and the grip 21 is larger than the first preset distance. At this time, the processor of the gimbal may perform the power-on operation. Correspondingly, when the sensing signal is larger than or equal to the second preset threshold, it may indicate that the distance between the first member 11 and the grip 21 is smaller than or equal to the second preset distance, and the processor of the gimbal may perform the power-off operation.

The first preset threshold may be equal to the second preset threshold. When the first preset threshold and the second preset threshold are equal, the processor of the gimbal may perform the power-on operation when the first member 11 and the grip 21 are in the state shown in FIG. 3, and the first member 11 moves further away from the grip 21. The processor of the gimbal may perform the power-off operation when the first member 11 and the grip 21 are in the state shown in FIG. 3, or when the first member 11 moves further toward the grip 21.

In some embodiments, to prevent the user from accidentally triggering the power on and off when turning the first member 11, the first preset threshold may also be smaller than the second preset threshold. That is, the distance between the first member 11 and the grip when performing the power-on operation may be larger than the distance between the first member 11 and the grip when performing the power-off operation.

Optionally, in some embodiments, the gimbal may improve the accuracy of the timing of the power on and off operation by setting at least two non-contact sensors 30.

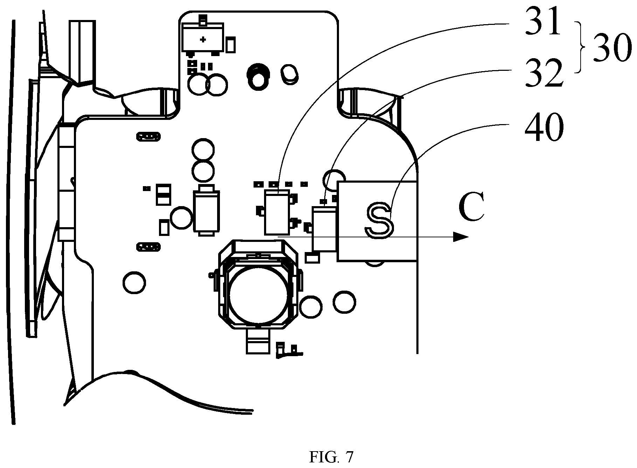

FIG. 7 is a partial enlarged view of FIG. 2. As shown in FIG. 7, in some embodiments, the non-contact sensor(s) 30 may include a first sensor 31 and a second sensor 32, wherein the first sensor 31 is arranged at the first member 11 or the second assembly 20, and the second sensor 32 is arranged at the first member 11 or the second assembly 20. The first sensor 31 may be used to output a first sensing signal, and the second sensor 32 may be used to output a second sensing signal. Therefore, when the first member 11 rotates, with the second degree of freedom, at any angle within the first rotation range of the first degree of freedom relative to the second assembly 20, the gimbal may perform the control operation according to the first sensing signal and the second sensing signal.

In this way, the gimbal may perform the control operation in combination with the first sensing signal and the second sensing signal output by the first sensor 31 and the second sensor 32, thereby expanding the sensing range and improving the detection accuracy.

In addition, when any one of the first sensor 31 and the second sensor 32 fails, the gimbal may still be able to detect through the other sensor and perform the corresponding control operation. By setting two sensors, the reliability of the non-contact sensor(s) 30 may also be improved.

Of course, in some embodiments, the first sensor 31 and/or the second sensor 32 may also include a magnetic induction sensor. Similar to the above embodiments, when the first sensor 31 and/or the second sensor 32 include a magnetic induction sensor, the gimbal may also include a sensing element 40 made of a magnetic material. The magnetic induction sensor may be arranged at one of the gimbal assembly 12 or the grip 21, and the sensing element 40 may be arranged at the other of the gimbal assembly 12 or the grip 21. The first sensor 31 and/or the second sensor 32 may be used to output a sensing signal according to the change in relative position between it and the sensing element 40.

In the embodiments of the present disclosure, the first sensor 31 and the second sensor 32 may be arranged at the same component or in different components, and may be specifically arranged according to actual needs.

The gimbal may include a sensing element 40, and the first sensor 31 and the second sensor 32 may be used to detect the relative position with same sensing element 40, and output the first sensing signal and the second sensing signal to save the layout space and avoid magnetic interference affecting the accuracy of the detection.

Of course, in other optional embodiments, the gimbal may also include two or more sensing elements 40, and the first sensor 31 and the second sensor 32 may be used to detect the relative position with different sensing elements 40 respectively, which may be set according to the actual situation.

In some embodiments, the first sensor 31 or the second sensor 32 may include a Hall sensor and/or an AMR sensor.

As shown in FIG. 7, according to the sensing principle of the AMR sensor, for the magnetic induction sensor set at Z, since the magnet and the AMR sensor are located in the same vertical direction, the horizontal magnetic field component of the magnet at the AMR sensor may approximately be zero. That is, the AMR sensor may have an induction blind area.

At this time, by setting two sensors, it may be possible to determine whether to perform the control operation in the induction blind area of the AMR sensor in combination with the sensing signal of another sensor, thereby improving the accuracy of the timing of performing the power-on and power-off operations.

Specifically, in some embodiments, the first sensor 31 may include a Hall sensor, and the second sensor 32 may include an AMR sensor. As may be seen from the foregoing content, when the second sensor 32 is an AMR sensor, when the first member 11 rotates relative to the grip 21, the magnet may be in the induction blind area of the second sensor 32. At this time, the first sensor 31 may include a Hall sensor, which may sense the vertical component of the magnetic field generated by the magnet.

When the second sensor 32 cannot sense the horizontal component of the magnetic field generated by the magnet, the first sensor 31 may still be able to sense the vertical component of the magnetic field, thereby avoiding the situation where the second sensor 32 outputs a sensing signal in the induction blind area when the first member 11 rotates with the second degree of freedom at any angle of the first degree of freedom, causing the gimbal to erroneously trigger the power-on and power-off operation or fail to trigger the power-on and power-off operation, thereby improving the accuracy of the timing of the power-on and power-off operation.

Of course, in other optional embodiments, the first sensor 31 and the second sensor 32 may both include AMR sensors. At this time, the first sensor 31 and the second sensor 32 may not be located in the same vertical direction, so that the sensing blind areas of the two sensors for the sensing element 40 do not overlap with each other, to improve the detection accuracy.

In the embodiments of the present disclosure, the setting positions of the first sensor 31 and the second sensor 32 may be set according to actual needs. As shown in FIG. 2,

FIG. 5 and FIG. 7, in some embodiments, the first sensor 31 and the second sensor 32 may both be arranged at the grip 21, and the sensing element 40 may be arranged at the gimbal assembly 12.

Further, to improve the aesthetics and space utilization of the gimbal, in some embodiments, the first sensor 31 and the second sensor 32 may both be arranged at the grip 21.

Further, as shown in FIG. 7, in some embodiments, the first sensor 31 and the second sensor 32 may be arranged at a same circuit board. To avoid the situation where one of the first sensor 31 and the second sensor 32 cannot sense the sensing element 40 when they are far apart, and to make the first sensor 31 and the second sensor 32 sense the sensing element 40 more accurately, in some embodiments, the first sensor 31 may be arranged adjacent to the second sensor 32.

Similar to the above embodiments, for a foldable gimbal, the first sensor 31 and the second sensor 32 may output sensing signals during the folding process, and the gimbal may perform the control operations according to the sensing signals.

As shown in FIG. 3 and FIG. 4, in some embodiments, the gimbal assembly 12 includes a first member 11 and a folding mechanism 1213, and the first member 11 and the folding mechanism 1213 are connected. The first member 11 may rotate with the second degree of freedom through the folding mechanism 1213, such that the end of the first member 11 away from the folding mechanism 1213 is close to or away from the grip 21. The sensing element 40 may be arranged at the first member 11.

As may be seen from the above embodiments, the non-contact sensor(s) 30 may be used to output the sensing signal according to the relative position change between the first member 11 and the grip 21, such that the gimbal may perform the control operation according to the sensing signal during the process of the first member 11 rotating with the second degree of freedom through the folding mechanism 1213.

In some embodiments of the present disclosure, the sensing element 40 may be arranged at the first member 11. Since the end of the first member 11 away from the folding mechanism 1213 may be close to or away from the grip 21 during the process of the first member 11 rotating with the second degree of freedom through the folding mechanism 1213, the first sensor 31 and the second sensor 32 may output the first sensing signal and the second sensing signal according to the relative position change with the sensing element 40.

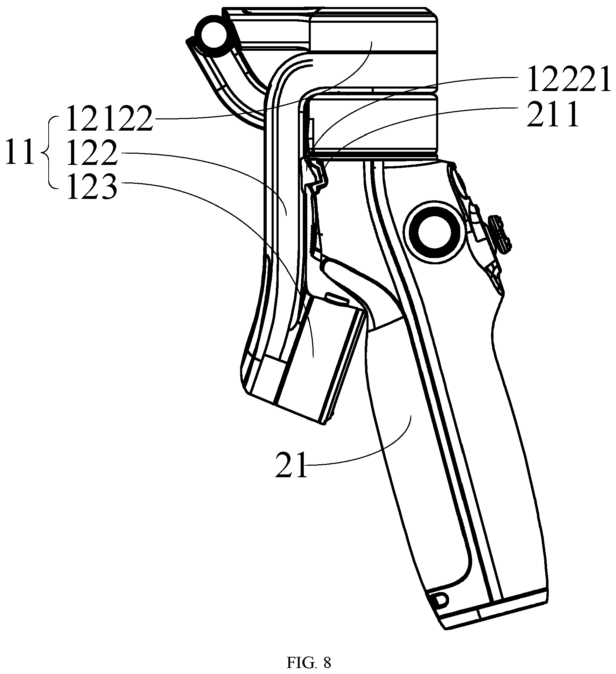

FIG. 8 is a state diagram showing the first member 11 rotating to the first joint angle with the second degree of freedom through the folding mechanism 1213. As shown in FIG. 1, FIG. 3, and FIG. 8, at this time, the first member 11 is close to the grip 21 and there is contact with the grip 21, and the gimbal is in a fully folded state. FIG. 1 is a state diagram showing the first member 11 rotating to the second joint angle, with the second degree of freedom, through the folding mechanism 1213, and the end of the first member 11 is away from the grip 21, and the gimbal is in an unfolded state at this time. FIG. 3 is a state diagram showing the first member 11 rotating to the third joint angle, with the second degree of freedom, through the folding mechanism 1213, and the gimbal is in a partially unfolded intermediate state at this time.

In some embodiments, the magnetic poles of the sensing element 40 may be distributed along a first direction, and the first direction may be perpendicular to the extension direction of the first member 11. As shown in FIG. 2 and FIG. 7, the sensing element 40 is arranged at the first member 11, and the distribution direction of the N pole and the S pole of the sensing element 40 is approximately perpendicular to the extension direction of the first member 11. Since the external magnetic field generated by the magnet is emitted from the N pole to the S pole, the magnetic field strength in the direction of the N pole and the S pole distribution changes significantly with distance. Therefore, during the rotation of the first member 11 with the second degree of freedom, the change in magnetic field strength may be more obvious and easier to be detected by the magnetic induction sensor. Specifically, the sensing element 40 may be a bar magnet.

Of course, in other optional embodiments, the first direction may also have a certain angle with the normal line of the extension direction of the first member 11, which may be further set according to the actual application scenario.

In some embodiments, when the first member 11 rotates to the first joint angle, with the second degree of freedom, through the folding mechanism 1213, the first sensor 31 and the second sensor 32 may both be located on the side close to the first member 11 and face the sensing element 40.

As shown in FIG. 5, in some embodiments, the first sensor 31 and the second sensor 32 are arranged at the same circuit board, and the circuit board is located on the side of the grip 21 close to the first member 11. The first sensor 31 and the second sensor 32 are located on the side of the circuit board close to the first member 11.

In this way, when the first member 11 rotates to the first joint angle, with the second degree of freedom, through the folding mechanism 1213, the distance from the first sensor 31 and the second sensor 32 to the sensing element 40 may be relatively close, and they may be located in the direction of the strong magnetic field, such that the amplitude of the sensing signal outputted is relatively large, which is more conducive to the gimbal to perform the control operations based on the sensing signal.

As shown in FIG. 7, in some embodiments, the first sensor 31 and the second sensor 32 may be distributed along the second direction, and the second direction is perpendicular to the extension direction of the grip 21, that is, the C direction as shown in the figure. In this way, the first sensor 31 and the second sensor 32 may be respectively located in different directions of the magnetic field generated by the sensing element 40, such that the sensing element does not leave the sensing range of the two sensors during the movement of the sensing element 40.

When the gimbal is in the fully folded state, that is, when the first member 11 rotates to the first joint angle, with the second degree of freedom, through the folding mechanism 1213, the projection of the normal plane of the first sensor 31, the second sensor 32 and the sensing element 40 in the third direction may be roughly distributed along the second direction. The second direction may be perpendicular to the extension direction of the grip 21, or parallel to the extension direction of the grip 21. The third direction may be perpendicular to the first sensor 31 or the second sensor 32, and may be understood as the sensing direction of the first sensor 31 or the second sensor 32. When the first sensor 31 and the second sensor 32 are arranged at the same circuit board, it may be a direction perpendicular to the circuit board.

In this way, the first sensor 31 and the second sensor 32 may be located in an orientation with a strong magnetic field, and the output sensing signal amplitude may be large, which is more conducive to the gimbal to perform the control operations according to the sensing signal.

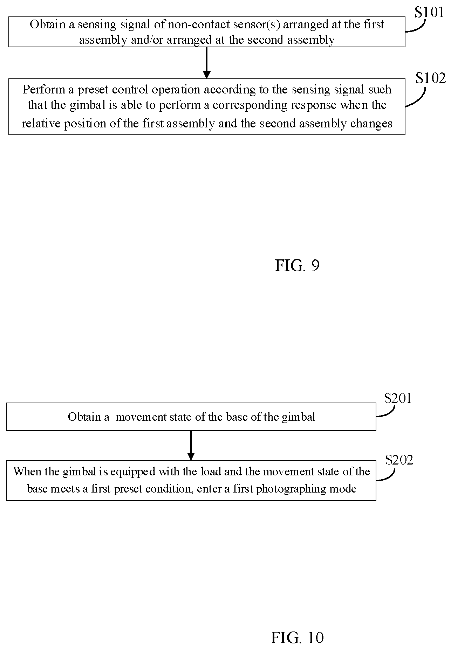

Of course, in other optional embodiments, the first sensor 31 and the second sensor 32 may also be arranged at the left and lower sides of the sensing element 40 in FIG. 10, respectively. Specifically, further settings may be made according to the actual spatial arrangement.

To prevent the first member 11 from still being able to rotate with the first degree of freedom after the gimbal is folded, in some embodiments, when the first member 11 rotates to the first joint angle, with the second degree of freedom, through the folding mechanism 1213, the rotation of the first member 11 with the first degree of freedom may be limited.

When the first member 11 rotates to the first j oint angle, the gimbal may use its own structure to mechanically limit the first member 11, or it may algorithmically limit the first member 11 through the control algorithm of the motor, such that the rotation of the first member 11 with the first degree of freedom is limited. It should be understood that the rotation of the first member 11 with the first degree of freedom is limited, which may mean that the first member 11 cannot rotate with the first degree of freedom, or may only rotate within a certain angle range.

Further, the gimbal may limit the rotation of the first member 11 with the first degree of freedom by the cooperation of a slot 211 and an engagement protrusion 12221. In some embodiments, one of the grip 21 and the first member 11 may be provided with a slot 211, and the other may be provided with the engagement protrusion 12221. When the first member 11 rotates to the first position, the engagement protrusion 12221 may cooperate with the slot 211, such that the first member 11 cannot rotate with the first degree of freedom.

As shown in FIG. 8, the grip 21 may be provided with the slot 211, and the first member 11 may be provided with the engagement protrusion 12221. At this time, the first degree of freedom may be the degree of freedom of rotation around the yaw axis. After the gimbal is fully folded, the engagement protrusion 12221 may be at least partially located in the slot 211 to prevent the first member 11 from rotating around the yaw axis, which affects the user's carrying.

Of course, in other optional embodiments, a slot may be provided on the first member 11, and an engagement protrusion may be provided on the grip 21. Alternatively, in some embodiments, the gimbal may be relatively matched between the folded grip 21 and the gimbal assembly 12. For example, the third shaft assembly 123 may be blocked by the grip 21 to limit the rotation of the first member 11 with the first degree of freedom.

Further, as shown in FIG. 7, in some embodiments, when the engagement protrusion 12221 cooperates with the slot 211, the projections of the normal plane of the sensing element 40 and the second sensor 32 in the third direction may not overlap, to ensure that the second sensor 32 may sense the sensing element 40 and output the sensing signal when the second sensor 32 is an AMR sensor and when the gimbal is in a fully folded state. At this time, the third direction may be a direction perpendicular to the second sensor.

In the case where the non-contact sensor(s) 30 include the first sensor 31 and the second sensor 32, the processor of the gimbal may perform the control operation in combination with the first sensing signal and the second sensing signal.

In some embodiments, the processor of the gimbal may also perform at least one of the following:
when the first sensing signal is smaller than the third preset threshold or the second sensing signal is smaller than the fourth preset threshold, performing the power-on operation; or when the first sensing signal is larger than or equal to the fifth preset threshold and the second sensing signal is larger than or equal to the sixth preset threshold, performing the power-off operation.

The gimbal may perform the power-on operation when both the first sensing signal and the second sensing signal are smaller than the certain threshold, and perform the power-off operation when both are larger than or equal to the certain threshold. In this way, by combining the two sensing signals to perform the control operations, it may be possible to reduce the erroneous operation performed by the gimbal when judging by only the sensing signal of one sensor, and further improve the accuracy of the timing of power-on and power-off operations.

It should be understood that the third preset threshold and the fourth preset threshold may be the same or different. The fifth preset threshold and the sixth preset threshold may be the same or different. They may be specifically set according to the type and structure of the first sensor 31 and the second sensor 32. The third preset threshold may be equal to the fifth preset threshold or smaller than the fifth preset threshold. The fourth preset threshold may be equal to the sixth preset threshold or smaller than the sixth preset threshold, which will not be detailed here.

The present disclosure also provides a gimbal control method, to improve the convenience of the user when powering on and off the gimbal. FIG. 9 is a schematic flow chart of a gimbal control method consistent with embodiments of the present disclosure. As shown in FIG. 9, the method may be applied to the gimbal. Specifically, it may be executed by the processor of the gimbal, or it may be executed by an external processor connected to the gimbal in communication, which is not limited here.

The gimbal may include a first assembly and a second assembly, and the first assembly may be mechanically coupled with the second assembly. The method includes:
S101, obtaining a sensing signal of non-contact sensor(s) arranged at the first assembly and/or arranged at the second assembly; and
S102, according to the sensing signal, performing a preset control operation such that the gimbal may perform a corresponding response when the relative position of the first assembly and the second assembly changes. The control operation may include any of a power-on operation or a power-off operation.

As shown in FIG. 1 to FIG. 8, in some embodiments of the present disclosure, the structure of the first assembly 10 and the second assembly 20 may be set with reference to the above embodiments. To avoid repetition, it will not be detailed here. For the specific implementation of the method steps of the embodiments of the present disclosure, reference can be made to the description of the above embodiments, which will not be repeated here.

In some embodiments of the present disclosure, the gimbal may be provided with non-contact sensor(s) on the first assembly and/or the second assembly. When the relative position of the mechanically coupled first assembly and the second assembly changes, the gimbal may perform the corresponding power-on operation or power-off control operation according to the sensing signal output by the non-contact sensor(s). In this way, the user may automatically power on or off the gimbal by simply changing the relative position of the first assembly and the second assembly, which improves the convenience of the user when performing the power-on and power-off operation.

Furthermore, if a contact sensor is used, for example, if a pressure sensor is set between the first assembly and the second assembly, the contact between the pressure sensor and the first assembly and the second assembly is used to determine whether the positions of the first assembly and the second assembly have changed, and there is often a problem of a small sensing range. At the same time, the frequent contact between the contact sensor and the object to be measured will cause mechanical loss and affect the service life of the gimbal.

Sensing through non-contact sensor(s) may improve the sensing range while avoiding the mechanical loss caused by the contact sensor (such as a pressure sensor) when it contacts the object to be measured, thereby improving the service life of the gimbal.

In some embodiments, S102 may include at least one of the following:
S1021, when the sensing signal is smaller than or equal to the first preset threshold, performing power-on operation; or
S1022, when the sensing signal is larger than or equal to the second preset threshold, performing the power-off operation.

In some embodiments, the first preset threshold may be smaller than the second preset threshold.

In some embodiments, the non-contact sensor(s) may include at least one of a magnetic induction sensor, an infrared sensor, a laser sensor, an ultrasonic sensor, a visual sensor, or a millimeter wave radar sensor.

When the non-contact sensor(s) include a magnetic induction sensor, the gimbal may also include a sensing element made of a magnetic material.

In some embodiments, the non-contact sensor(s) may include a first sensor and a second sensor. The first sensor may be arranged at the first assembly or the second assembly, and the second sensor may be arranged at the first assembly or the second assembly. The first sensor may be used to output a first sensing signal, and the second sensor may be used to output a second sensing signal. S102 may include:
S1023, performing one control operation according to the first sensing signal and/or the second sensing signal.

In some embodiments, S1023 may include at least one of: performing the power-on operation when the first sensing signal is smaller than or equal to a third preset threshold or the second sensing signal is smaller than a fourth preset threshold; or, performing the power-off operation when the first sensing signal is larger than or equal to a fifth preset threshold and the second sensing signal is larger than or equal to a sixth preset threshold.

In some embodiments, the third preset threshold may be smaller than the fifth preset threshold, and/or the fourth preset threshold may be smaller than the sixth preset threshold.

In some embodiments, the first sensor and/or the second sensor may include a magnetic induction sensor, and the gimbal may further include a sensing element made of a magnetic material. S102 may include: performing one control operation according to the first sensing signal and/or the second sensing signal, such that the gimbal may perform a corresponding response when the relative position of the first sensor and/or the second sensor and the sensing element changes.

In some embodiments, the first sensor may include a Hall sensor, and the second sensor may include an anisotropic magnetoresistive (AMR) sensor.

In some embodiments, when the gimbal performs the power-off operation, the non-contact sensor(s) may remain powered on.

For the specific implementation methods of the above embodiments, reference can be made to the relevant descriptions of the previous gimbal embodiments, which will not be repeated here to avoid repetition.

In the scenario where the user needs to photograph at a fixed photographing angle, the gimbal may be used with auxiliary equipment such as a leg and a load for photographing. At this time, the position of the base of the gimbal remains roughly unchanged such that the load may obtain a fixed photographing angle. According to the stabilization control logic of the gimbal, to avoid the shaking of the gimbal base and the abnormal movement of the gimbal shaft arm, there is often a large margin between the three-axis controllable angle range of the gimbal and the actual joint angle limit. When the gimbal shaft arm exceeds the controllable angle range, the gimbal may control the motor to rotate such that the shaft arm returns to the controllable angle range, which may result in a smaller adjustable angle range of the three axes of the gimbal. When the user needs to adjust to another photographing angle, the load may not be adjusted to the required angle, which may result in a poor user experience.

The present disclosure also provides another gimbal control method, to enhance the user experience when using the gimbal to photograph at different fixed photographing angles.

FIG. 10 is a schematic flow chart of another gimbal control method consistent with embodiments of the present disclosure. The method may be applied to the gimbal. Specifically, it may be executed by the processor of the gimbal, or it may be executed by an external processor connected to the gimbal in communication, which is not limited here. The gimbal may include a base and a shaft arm assembly, and the shaft arm assembly may be connected to the base for mounting a load. The shaft arm assembly may include at least one shaft arm, and the shaft arm may rotate around at least one axial direction relative to the base to adjust the pose of the load.

The method may include:
S201, obtaining the movement state of the base of the gimbal; and
S202, when the gimbal carries the load and the movement state of the base meets a first preset condition, entering a first photographing mode, where the first preset condition includes that the pose of the base remains substantially unchanged.

When the gimbal is in the first photographing mode, the target shaft arm of the shaft arm assembly may not stabilize the load, and the target shaft arm may rotate from the first joint angle to the second joint angle, with the first degree of freedom, when subjected to an external force, and may be maintained at the second joint angle.

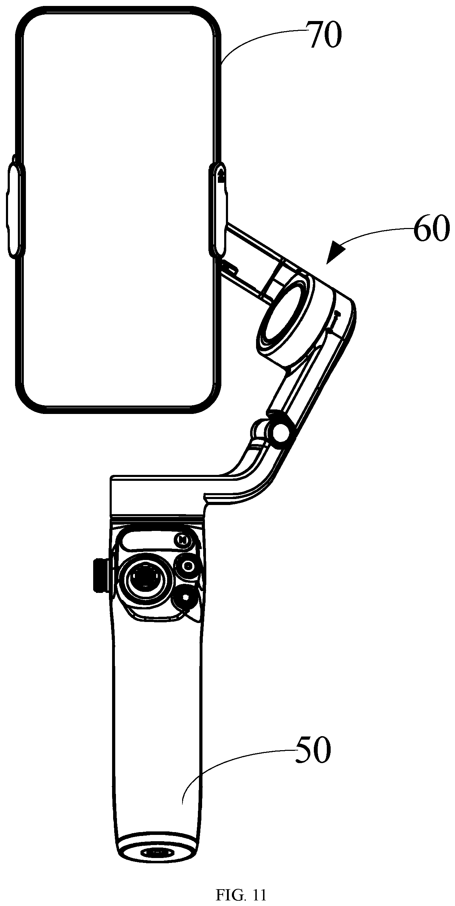

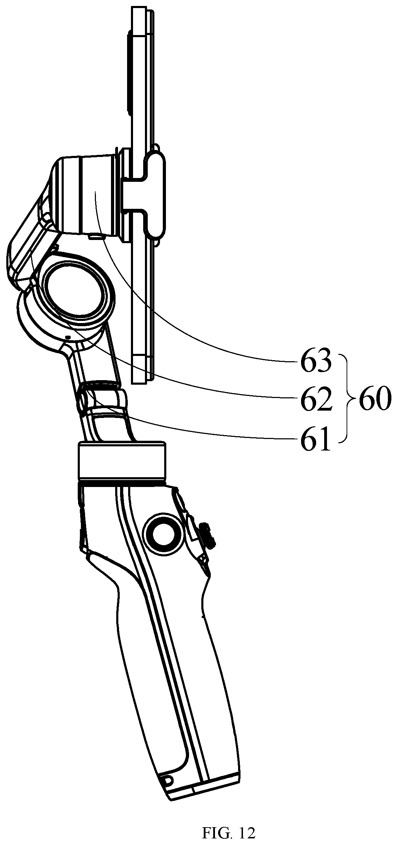

As shown in FIG. 11 and FIG. 12, the gimbal shown in FIG. 11 and FIG. 12 is a three-axis handheld gimbal. The base 50 of the gimbal may be the handle of the gimbal. The shaft arm assembly 60 may be connected to the base 50 and used to carry the load 70. The shaft arm assembly 60 may include shaft assemblies corresponding to three axes, such as the yaw shaft assembly 61, the pitch shaft assembly 62 and the roll shaft assembly 63 shown in FIG. 15. The shaft assembly corresponding to each axis may include a motor and a shaft arm, and the shaft arm may be driven by the motor to rotate around the corresponding axial direction.

It should be understood that the method of the embodiments of the present disclosure may be applied to a three-axis gimbal, a two-axis gimbal, or a single-axis gimbal, which is not limited here.

In S201, the movement state of the base of the gimbal may be obtained by a sensor set on the gimbal.

Specifically, in some embodiments, the gimbal may be provided with an inertial measurement unit (IMU), and the motion speed and/or motion acceleration of the base of the gimbal may be obtained based on the IMU. In some embodiments, the gimbal may also be provided with an accelerometer, a tilt sensor, a vibration sensor or an angular displacement sensor, etc., and the movement state of the base of the gimbal may be obtained in combination with the sensing signal of one or more sensors. Of course, in other optional embodiments, the movement state of the base of the gimbal may also be obtained from a sensor outside the gimbal. For example, the image data of the base of the gimbal may be obtained through a visual sensor, and the movement state of the base of the gimbal may be determined based on the image data. It should be understood that the gimbal may continuously obtain the movement state of the base, or obtain the movement state of the base within a preset time period, or the gimbal may also start to obtain the movement state of the base after receiving a specific input, which is not limited here.

In S202, when the gimbal carries the load and the movement state of the base meets the first preset condition, since the first preset condition includes that the pose of the base remains approximately unchanged, it usually indicates that the user may be equipped with auxiliary fixation equipment such as a leg and needs to photograph at a fixed photographing angle. At this time, the gimbal may enter the first photographing mode to facilitate the user to photograph.

The pose of the base may remain approximately unchanged, which may be understood as the change of the position and pose of the base within the preset time period does not exceed the preset range. Specifically, in some embodiments, the first preset condition may include that the motion speed or motion acceleration of the gimbal base is approximately 0.

In this case, since there are usually auxiliary fixation devices such as legs to fix the gimbal, users often do not have high requirements for the stabilization of the gimbal. Therefore, to increase the adjustable angle range of the target shaft arm of the shaft arm assembly, the target shaft arm may be controlled to cancel the stabilization of the load. At the same time, to facilitate the user to adjust the photographing angle of the load, the target shaft arm may rotate from the first joint angle to the second joint angle when the external force is applied, and may be maintained at the second joint angle.

The rotation of the target shaft arm by the external force may usually be understood as the process in which the target shaft arm rotates in the corresponding axial direction with the push-pull operation. The target shaft arm may rotate from the first joint angle to the second joint angle with the external force, and may be maintained at the second joint angle after the external force disappears. In other words, the target shaft arm may rotate with the push-pull operation and remain at the current joint angle when the push-pull operation stops. The user may adjust the photographing angle of the load by pushing and pulling the target shaft arm.

In some embodiments of the present disclosure, the movement state of the base of the gimbal may be obtained, and the first photographing mode may be entered when the gimbal carries the load and the movement state of the base remains roughly unchanged. In the first photographing mode, the target shaft arm of the shaft arm assembly may cancel the stabilization of the load to increase the adjustable angle range of the target shaft arm. At the same time, the target shaft arm may rotate from the first joint angle to the second joint angle when subjected to the external force, and may be maintained at the second joint angle. This may allow the user to rotate the target shaft arm in a larger angle range to keep the load at a suitable photographing angle, which improves the user's freedom in the process of photographing with the gimbal, that is, improves the user's experience.

The load in the embodiments of the present disclosure may be a photographing device, which may specifically include a mobile phone, a camera or a video camera, etc., which are not listed here one by one.

It should be understood that the target shaft arm may include any shaft arm in the shaft arm assembly, such as a yaw shaft arm, a pitch shaft arm or a roll shaft arm. The gimbal may control one or more target shaft arms of the shaft arm assembly to cancel the stabilization of the load, or may control all the shaft arms of the shaft arm assembly to cancel the stabilization of the load, which may be set according to actual needs.

Accordingly, the first degree of freedom may include any one of the degree of freedom of rotation about the roll axis, the degree of freedom of rotation about the pitch axis, or the degree of freedom of rotation about the yaw axis.

Since the gimbal has a corresponding stabilized photographing mode in the movement state, the gimbal may switch between the first photographing mode and the stabilized photographing mode. In some embodiments, the method may also include:
S203, when the gimbal is in the first photographing mode, performing a mode switching operation in response to the gimbal meeting the second preset condition.

Specifically, in some embodiments, the second preset condition may include that the movement state of the base of the gimbal does not meet the first preset condition, or that the first information sent by the load is received and the first information is used to instruct the gimbal to exit the first photographing mode.

In S203, performing the mode switching operation may include: S2031, entering the second photographing mode. When the gimbal is in the second photographing mode, the target shaft arm may stabilize the load.

When the movement state of the base of the gimbal changes when the gimbal is in the first photographing mode, the gimbal may exit the first photographing mode and switch to the second photographing mode for stabilization. For example, in some embodiments, when the user removes the gimbal from an auxiliary fixation device such as a leg, or when the user moves an auxiliary fixation device such as a leg, the gimbal may automatically switch to the second photographing mode when the movement state of the gimbal base does not meet the first preset condition, to avoid manual operation by the user. In some embodiments, the user may input on the load such that the load sends the first message instructing the gimbal to exit the first photographing mode to the gimbal. After receiving the first message, the gimbal may exit the first photographing mode and switch to the second photographing mode.

It should be understood that in the first pose, the joint angle of the target shaft arm of the shaft arm assembly may be within the controllable angle range in the stabilization mode to avoid the gimbal being unable to control the target shaft arm in the second photographing mode.

By adjusting the shaft arm assembly to the preset first pose when entering the second photographing mode, the situation where the shaft arm assembly moves because of different control strategies in different photographing modes may be reduced. At the same time, returning to the preset first pose may also facilitate the user to photograph in the second photographing mode.

Optionally, the gimbal may have an idle mode, and the gimbal may be switched from the first photographing mode to the idle mode during the mode switching process. In some embodiments, the second preset condition may include that the gimbal is not carrying the load.

Accordingly, S203 may specifically include:
S2032, entering the idle mode. When the gimbal is in the idle mode, the target shaft arm may rotate from the fifth joint angle to the sixth joint angle, with the first degree of freedom, when subjected to an external force, and may be maintained at the sixth joint angle.

As shown in FIG. 1, the gimbal shown in FIG. 1 is in a state where there is no load. Specifically, a sensor may be set to determine whether the gimbal is carrying a load, which is not listed here one by one.

When the gimbal is in the no-load mode, the target shaft arm may also rotate from the fifth joint angle to the sixth j oint angle, with the first degree of freedom, when subjected to the external force, and may remain at the sixth joint angle when the external force disappears. In this way, the user may adjust the pose of the shaft arm assembly when the gimbal is in the no-load state, such that the user may carry the load.

Further, in some embodiments, S2032 may specifically include:
controlling the shaft arm assembly to maintain a second pose, where the second pose may be the pose of the shaft arm assembly before the gimbal switches from the first photographing mode to the no-load mode.

The situation of switching from the first photographing mode to the no-load mode may usually be the situation where the user removes the load from the shaft arm assembly. In this case, the gimbal may control the shaft arm assembly to maintain the second pose before entering the no-load mode, such that the user may carry the load again.

In some embodiments, the method may also include: S204, when the gimbal is controlled to switch from the first photographing mode to the second photographing mode, adjusting the joint angle of at least one shaft arm such that the shaft arm assembly is in a third pose, where the third pose may be determined by the target pose information of the shaft arm assembly when the gimbal is in the second photographing mode.

It should be understood that in S204, the target pose information may be information indicating the third pose corresponding to the shaft arm assembly in the second photographing mode. Specifically, the target pose information may be information obtained by the gimbal before entering the first photographing mode. Thus, when the gimbal switches from the first photographing mode to the second photographing mode again, the gimbal may use the target pose information to adjust the joint angle of at least one shaft arm such that the shaft arm assembly is in the third pose in the second photographing mode.

In some embodiments, the target pose information may include the pose angle information of at least one shaft arm in the shaft arm assembly. In some embodiments, the target pose information may also include the joint angle information of at least one shaft arm in the shaft arm assembly.

Specifically, the target pose information may include the joint angle information or pose angle information of the roll axis in the shaft arm assembly. In some embodiments, the gimbal may record the joint angle of the roll shaft arm as the target pose information before entering the first photographing mode, and when switching from the first photographing mode to the second photographing mode, the roll axis motor may control the roll shaft arm to rotate to the previously recorded joint angle.

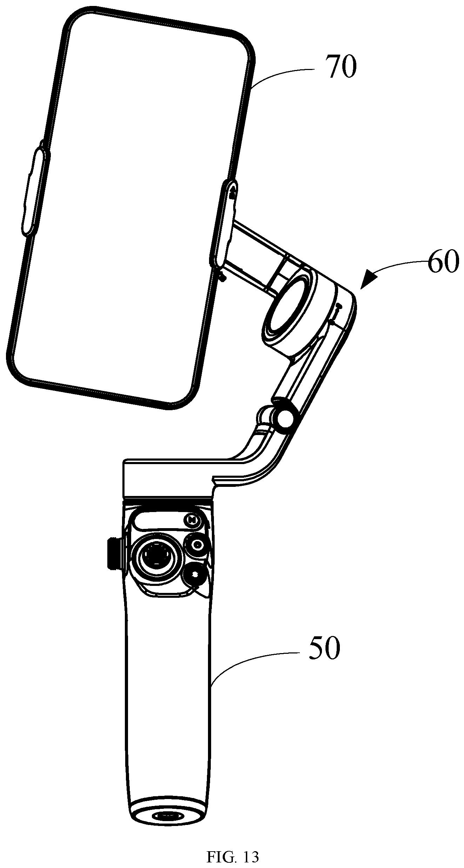

In the second photographing mode, the roll shaft arm may usually only maintain two poses of 0° and 90°. For example, as shown in FIG. 11 and FIG. 13, if the pose of the shaft arm assembly 60 shown in FIG. 11 is the third pose, the joint angles of the roll shaft arm, the pitch shaft arm and the yaw shaft arm are all 0°, and the gimbal may obtain the target pose information corresponding to the third pose, specifically the joint angle information of the roll shaft arm. After entering the first photographing mode, the pose of the shaft arm assembly 60 changes to the pose shown in FIG. 13, and the joint angle of the roll shaft arm is not 0°. When controlling the gimbal to switch from the first photographing mode to the second photographing mode again, the roll shaft arm of the shaft arm assembly 60 may be adjusted back to the joint angle shown in FIG. 11, such that the user may photograph vertically. Of course, in other optional embodiments, if the joint angle of the roll shaft arm in the third pose is 90°, that is, the load is in a horizontal setting, when switching from the first photographing mode to the second photographing mode, the roll shaft arm may also be adjusted to 90°, such that the user may photograph horizontally.

In this way, the gimbal may automatically adjust to the third pose recorded previously when switching from the first photographing mode to the second photographing mode, avoiding the need for the user to frequently adjust the pose of the shaft arm assembly when switching photographing modes, and improving the convenience of the user during photographing.

Optionally, the gimbal may have a protection mode, and the gimbal may switch from the first photographing mode to the protection mode during the mode switching.

In some embodiments, the second preset condition may include that the base is in a suspended state, and/or that the shaft arm assembly is connected to the load and the moment of inertia corresponding to the load is smaller than a preset threshold. Correspondingly, S203 may specifically include: S2033, entering the protection mode. When the gimbal is in the protection mode, the motor of the target shaft arm stops outputting torque.

In the case where the base of the gimbal is a handle, the user holding the handle may bring resistance to the rotation of the handle. When the handle is in the suspended state, the user's resistance to the handle may disappear. Based on this, the gimbal may determine whether the base is in the suspended state.

Specifically, in some embodiments, the gimbal may determine whether the base is in the suspended state by obtaining the rotational inertia of the base in the target axial direction in conjunction with the rotational angular velocity of the rotation shaft motor that drives the base to rotate. Of course, in some other embodiments, the gimbal may also enter the protection mode when the load is too small or the load is not installed in place.

When the base is suspended, to prevent the base from being driven by the motor and shaking unexpectedly, the motor of the target shaft arm may stop outputting torque. In other words, the target shaft arm may be in a state of force loss at this time.

In some embodiments, the shaft arm assembly may be provided with an inertial measurement unit (IMU), and S201 may specifically include: S2011, obtaining the induction signal of the IMU, where the induction signal is used to indicate the movement state of the shaft arm assembly; and S2012, based on the induction signal, determining the movement state of the base. The inertial measurement unit may be set in the shaft arm assembly, specifically, it may be set at the motor of the roll axis, and may be used to detect the movement state of each shaft arm in the shaft arm assembly.

Since the base of the gimbal is connected to the shaft arm assembly, the gimbal may determine the movement state of the base of the gimbal according to the movement state of the shaft arm assembly. For example, in some embodiments, the gimbal may determine that the base of the gimbal is in motion when the sensing signal indicates that the shaft arm of the shaft arm assembly has motion acceleration but does not rotate around the axial direction, and may further determine the motion acceleration of the base of the gimbal. In this way, the gimbal may determine the movement state of the base through the IMU set in the shaft arm assembly, thereby avoiding the need to add sensors to the base, reducing the space occupied by the base, and saving costs.

Optionally, the gimbal may choose whether to enter the first photographing mode through communication with the load. In some embodiments, S201 may specifically include: S2013, obtaining the movement state of the base of the gimbal when receiving the second information sent by the load. The load may send the second information to the gimbal when receiving the input for entering the first photographing mode.

The second information may be information indicating that the load instructs the gimbal to enter the first photographing mode. Before the load sends the second information to the gimbal, the load may establish a communication connection with the gimbal. Specifically, in some embodiments, the user may establish a communication connection with the gimbal through the application of the load, and instruct the load to send the second information to the gimbal by inputting the interactive control indicating the start of the first photographing mode in the interactive interface of the application. After receiving the second information, the gimbal may further obtain the movement state of the base to determine whether to enter the first photographing mode.

In this way, the user may remotely control the gimbal to enter the first photographing mode by inputting to the load, which improves the convenience of the user when photographing. At the same time, after the gimbal receives the second information, the motion information of the base may be obtained, which may avoid the resource occupation caused by the gimbal continuously obtaining the motion information of the base. In other optional embodiments, to reduce resource occupation, the gimbal may also obtain the motion information of the base after connecting to the leg, which may be set according to the actual application scenario.

Optionally, when the gimbal is in the first photographing mode, the user may control the gimbal to perform corresponding photographing operations by inputting to the gimbal. In some embodiments, after S202, the method may further include:
S205, receiving a first input; and
S206, in response to the first input, controlling the load to perform a preset photographing operation.

The preset photographing operation may include at least one of the following: adjusting focal length; adjusting focus; or photographing.

The first input may be a user's touch operation on a physical button on the gimbal. For example, the user may control the load to perform a photographing operation by clicking a photographing button set on the gimbal. The first input may also be a user's touch operation on other control structures on the gimbal. For example, the user may also control the load to adjust the photographing focal length by adjusting the dial structure set on the gimbal. Of course, the first input may also be a user's touch and/or non-touch operation on a virtual interactive control on the gimbal, which is not listed here one by one.

It should be understood that the gimbal may control the load to perform the corresponding preset photographing operation by sending an instruction for performing the preset photographing operation to the load when it is in communication connection with the load. In this way, the user may control the load to perform the preset photographing operation by the first input to the gimbal in the first photographing mode, thereby improving the convenience of the user when photographing.

Optionally, the user may adjust the pose of the shaft arm assembly by inputting to the gimbal when the gimbal is in the first photographing mode. In some embodiments, after S202, the method may further include:
S207, receiving a second input; and
S208, in response to the second input, adjusting the joint angle of at least one shaft arm such that the shaft arm assembly is in a preset fourth pose. The second input may be similar to the aforementioned first input, and to avoid repetition, it is not detailed here.

The fourth pose may be a preset pose of the gimbal when it leaves the factory, or a pose preset by the user. For example, as shown in FIG. 11, in some embodiments, the fourth pose may be a zero-position pose when the joint angle of the shaft arm of each axis is 0°. At this time, the second input may control the shaft arm assembly to "return to center," such that the user may further adjust the pose of the shaft arm assembly based on the zero-position pose. In some embodiments, the fourth pose may also be a historical pose previously stored by the gimbal, such that the user may photograph in the fourth pose, which is not limited here.

In this way, the user may adjust the shaft arm assembly of the gimbal to the preset fourth pose through the second input, which may facilitate the user to further adjust the pose of the shaft arm assembly based on the fourth pose, or facilitate the user to photograph based on the fourth pose, thereby improving the convenience of the user when photographing.

The present disclosure also provides a gimbal. In some embodiments, the gimbal includes a base and a shaft arm assembly. The shaft arm assembly is connected to the base, and is used to carry the load. The shaft arm assembly includes at least one shaft arm, and the shaft arm may rotate around at least one axial direction relative to the base to adjust the pose of the load.

The gimbal also includes a memory and a processor. The memory is used to store computer programs. The processor is used to execute the computer program and implement any gimbal control method provided by various embodiments of the present disclosure when executing the computer program.

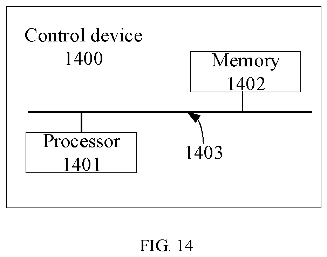

FIG. 14 is a schematic structural block diagram of a gimbal control device provided by one embodiment of the present disclosure. The control device may be applied to the aforementioned gimbal. The control device may be integrated in the aforementioned gimbal, or may be independently set with the gimbal and communicated, and the aforementioned gimbal control method may also be applied to the control device.

As shown in FIG. 14, the control device 1400 includes a processor 1401 and a memory 1402, and the processor 1401 and the memory 1402 are connected via a bus 1403. The bus 1403 is, for example, an I2C (Inter-integrated Circuit) bus. Specifically, the processor 1401 may be a microcontroller unit (MCU), a central processing unit (CPU) or a digital signal processor (DSP), etc. Specifically, the memory 1402 may be a flash chip, a read-only memory (ROM) disk, an optical disk, a USB flash drive or a mobile hard disk, etc.

The processor 1401 may be used to run a computer program stored in the memory 1402, and, when executing the computer program, to perform:
obtaining a sensing signal of non-contact sensor(s) arranged at the first assembly and/or arranged at the second assembly; and, according to the sensing signal, performing a preset control operation such that the gimbal performs a corresponding response when the relative position of the first assembly and the second assembly changes. The control operation may include any of the following: a power-on operation; or a power-off operation.

Alternatively, in another embodiment, the processor 1401 may be used to run a computer program stored in the memory 1402, and, when executing the computer program, to perform:

Obtaining a movement state of the base of the gimbal; and when the gimbal carries a load and the movement state of the base meets the first preset condition, entering the first photographing mode. The first preset condition may include that the pose of the base remains approximately unchanged. When the gimbal is in the first photographing mode, the target shaft arm of the shaft arm assembly may not stabilize the load, and the target shaft arm may rotate from the first joint angle to the second joint angle, with the first degree of freedom, when subjected to an external force, and may be maintained at the second joint angle.

The present disclosure also provides a computer-readable storage medium. The computer-readable storage medium may be configured to store a computer program. The computer program may include program instructions. When the program instructions are executed by a processor, the processor may be configured to implement any gimbal control method provided by various embodiments of the present disclosure.

The computer-readable storage medium may be an internal storage unit of the gimbal described in any of the above embodiments, such as a hard disk or a memory of the gimbal. The computer-readable storage medium may also be an external storage device of the gimbal, such as a plug-in hard disk equipped on the gimbal, a smart memory card (Smart Media Card, SMC), a secure digital (Secure Digital, SD) card, a flash card (Flash Card), etc.

It should be understood that the terms used in the present disclosure are only for the purpose of describing specific embodiments and are not intended to limit the scope of the present disclosure. As used in the present disclosure and the attached claims, the singular forms "one," "a," and "the" are intended to include plural forms unless the context clearly indicates otherwise.

It should also be understood that the term "and/or" used in the present disclosure and the attached claims refers to any combination of one or more of the associated listed items and all possible combinations, and includes these combinations.

The above are only specific implementations of the present disclosure, but the scope of protection of the present disclosure is not limited thereto. Any technician familiar with the technical field may easily think of various equivalent modifications or substitutions within the technical scope disclosed in the present disclosure, and these modifications or substitutions should be included in the scope of protection of the present disclosure. Therefore, the scope of protection of the present disclosure shall be based on the scope of protection of the claims.

## Claims

1. A gimbal comprising:
a first assembly;
a second assembly mechanically coupled to the first assembly; and
non-contact sensor(s) arranged at the first assembly and/or the second assembly;
wherein:
the non-contact sensor(s) are used to output a sensing signal such that the gimbal is able to perform a corresponding control operation according to the sensing signal when the relative position of the first assembly and the second assembly changes; and
the control operation includes any one of a power-on operation or a power-off operation.

2. The gimbal according to claim 1, wherein:
the first assembly includes a first member, and the first member is able to rotate relative to the second assembly, with a first degree of freedom and a second degree of freedom;
the first degree of freedom corresponds to a preset first rotation range; and
when the first member rotates, with the second degree of freedom, relative to the second assembly at any angle within the first rotation range of the first degree of freedom such that the relative position of the first member and the second assembly changes and the sensing signal changes, the sensing signal is used to enable the gimbal to perform the control operation.

3. The gimbal according to claim 2, wherein the first degree of freedom includes any one of:
a degree of freedom of rotation around a roll axis;
a degree of freedom of rotation around a pitch axis; or
a degree of freedom of rotation around a yaw axis.

4. The gimbal according to claim 2, wherein:
the first assembly includes a gimbal assembly, and the first member is part of the gimbal assembly; and
the gimbal assembly includes at least one shaft assembly, and each shaft assembly is used to drive a load of the gimbal to rotate around a corresponding axial direction to achieve pose adjustment of the load.

5. The gimbal according to claim 4, wherein:
the first degree of freedom is a degree of freedom of rotation about one of the axial directions, and the second degree of freedom is a degree of freedom of rotation about an axial direction other than the axial direction corresponding to the first degree of freedom.

6. The gimbal according to claim 5, wherein:
the second assembly includes a grip;
the gimbal assembly includes a first shaft assembly, connected to the grip;
the first shaft assembly includes a first driver member and a first shaft arm;
the first shaft arm is connected to the first driver member, and is able to rotate around a first axial direction driven by the first driver member; and
the first member is connected to the first shaft arm, or includes at least part of the first shaft arm.

7. The gimbal according to claim 6, wherein the first degree of freedom is a degree of freedom of rotation about a first axial direction.

8. The gimbal according to claim 6, wherein the first shaft arm is provided with a folding mechanism, and the folding mechanism is able to enable the first member to rotate with the second degree of freedom.

9. The gimbal according to claim 8, wherein the first shaft arm includes:
a first sub-shaft arm connected to the first driver member;
a second sub-shaft arm, wherein the first member includes the second sub-shaft arm; and
the folding mechanism, wherein the folding mechanism is connected to the first sub-shaft arm and to the second sub-shaft arm, such that the second sub-shaft arm is able to rotate with the second degree of freedom.

10. The gimbal according to any one of claims 6 to 9, wherein the gimbal assembly further includes:
a second shaft assembly connected to the first shaft assembly, including a second driver member and a second shaft arm, wherein the second shaft arm is connected to the second driver member and is able to rotate around a second axial direction driven by the second driver member; and/or
a third shaft assembly connected to the second shaft assembly, including a third driver member, wherein the third driver member is able to rotate around a third axial direction.

11. The gimbal according to claim 10, wherein the first axial direction is the yaw axis axial direction, the second axial direction is the pitch axis axial direction, and the third axial direction is the roll axis axial direction.

12. The gimbal according to any one of claims 2 to 9, wherein:
the non-contact sensor(s) include a first sensor and a second sensor, wherein the first sensor is arranged at the first member or the second assembly, and the second sensor is arranged at the first member or the second assembly; and
the first sensor is used to output a first sensing signal, and the second sensor is used to output a second sensing signal, such that the gimbal is able to perform the control operation according to the first sensing signal and the second sensing signal when the first member rotates, with the second degree of freedom, at any angle within the first rotation range of the first degree of freedom relative to the second assembly.

13. The gimbal according to claim 12, wherein at least one of the first sensor or the second sensor includes an anisotropic magnetoresistive AMR sensor, and the gimbal further includes sensing element(s) made of magnetic material.

14. The gimbal according to claim 1, further including a processor, wherein the processor is configured to perform at least one of:
performing the power-on operation when the sensing signal is smaller than a first preset threshold; or
performing the power-off operation when the sensing signal is larger than or equal to a second preset threshold.

15. The gimbal according to claim 14, wherein the first preset threshold is smaller than the second preset threshold.

16. The gimbal according to claim 1, wherein:
the non-contact sensor(s) include a first sensor and a second sensor, wherein the first sensor is arranged at the first assembly or the second assembly, and the second sensor is arranged at the first assembly or the second assembly; and
the first sensor is used to output a first sensing signal, and the second sensor is used to output a second sensing signal, such that the gimbal is able to perform the control operation according to the first sensing signal and the second sensing signal when the relative position of the first assembly and the second assembly changes.

17. The gimbal according to claim 16, further comprising a processor, wherein the processor is configured to perform at least one of:
performing the power-on operation when the first sensing signal is smaller than a third preset threshold or the second sensing signal is smaller than a fourth preset threshold; or
performing the power-off operation when the first sensing signal is larger than or equal to a fifth preset threshold and the second sensing signal is larger than or equal to a sixth preset threshold.

18. The gimbal according to claim 16, wherein the first sensor and the second sensor have different types.

19. The gimbal according to claim 16, wherein the first sensor and the second sensor are arranged at a same circuit board.

20. The gimbal according to claim 16, wherein:
the first sensor and the second sensor are both arranged at the first assembly; or
the first sensor and the second sensor are both arranged at the second assembly.

21. The gimbal according to any one of claims 1 and 14 to 20, further comprising sensing element(s), wherein:
the non-contact sensor(s) are arranged at one of the first assembly and the second assembly, and the sensing element(s) are arranged at the other of the first assembly and the second assembly; and
the non-contact sensor(s) are used to output the sensing signal according to the relative position change between the non-contact sensor(s) and the sensing element(s).

22. The gimbal according to claim 21, wherein the number of the non-contact sensor(s) and the number of the sensing element(s) are able to be different.

23. The gimbal according to claim 21, wherein the non-contact sensor(s) include a magnetic induction sensor, and the sensing element(s) are at least partially made of magnetic material.

24. The gimbal according to claim 23, wherein the magnetic induction sensor includes a Hall sensor and/or an anisotropic magnetoresistive (AMR) sensor.

25. The gimbal according to claim 23, wherein:
the sensing element(s) are at least a part of one of the first assembly and the second assembly; or
the sensing element(s) include a magnet arranged inside one of the first assembly and the second assembly.

26. The gimbal according to claim 23, wherein:
when the non-contact sensor(s) include a first sensor and a second sensor, the sensing element(s) are arranged at the first assembly, and the first sensor and the second sensor are both arranged at the second assembly; and
the first assembly includes a gimbal assembly, the second assembly includes a grip, and the gimbal assembly is connected to the grip.

27. The gimbal according to claim 26, wherein:
the gimbal assembly includes the first member and a folding mechanism, wherein the first member is connected to the folding mechanism, and is able to rotate with a second degree of freedom through the folding mechanism such that an end of the first member away from the folding mechanism is close to or away from the grip; and
the sensing element(s) are arranged at the first member.

28. The gimbal according to claim 27, wherein magnetic poles of the sensing element(s) are distributed along a first direction, and the first direction is perpendicular to an extension direction of the first member.

29. The gimbal according to claim 26, wherein the first sensor includes a Hall sensor, and the second sensor includes an anisotropic magnetoresistive AMR sensor.

30. The gimbal according to claim 26, wherein the first sensor and the second sensor are distributed along a second direction, wherein the second direction is perpendicular to the extension direction of the grip.

31. The gimbal according to claim 27, wherein when the first member rotates to a first joint angle, with the second degree of freedom, by the folding mechanism, the rotation of the first member with the first degree of freedom is limited.

32. The gimbal according to claim 31, wherein:
one of the grip and the first member is provided with a slot, and the other is provided with an engagement protrusion; and
when the first member rotates to the first joint angle, with the second degree of freedom, the engagement protrusion is engaged with the slot.

33. The gimbal according to claim 32, wherein when the engagement protrusion is engaged with the slot, the projections of the normal plane of the sensing element(s) and the second sensor in a third direction do not overlap, and the third direction is perpendicular to the second sensor.

34. The gimbal according to claim 33, wherein when the first member rotates to the first joint angle, with the second degree of freedom, by the folding mechanism, the first sensor and the second sensor are both located on a side close to the first member and are arranged toward the sensing element.

35. The gimbal according to any one of claims 1 and 14 to 20, wherein the non-contact sensor(s) include at least one of:
an infrared sensor; a laser sensor; an ultrasonic sensor; a visual sensor; or a millimeter wave radar sensor.

36. A control method of a gimbal, the gimbal including a first assembly and a second assembly mechanically coupled to each other, the method comprising:
obtaining a sensing signal of non-contact sensor(s) arranged at the first assembly and/or arranged at the second assembly; and
performing a preset control operation according to the sensing signal such that the gimbal is able to perform a corresponding response when the relative position of the first assembly and the second assembly changes;
wherein the control operation includes any one of a power-on operation or a power-off operation.

37. The method according to claim 36, wherein performing the control operation according to the sensing signal includes:
when the sensing signal is smaller than or equal to a first preset threshold, performing the power-on operation; and
when the sensing signal is larger than or equal to a second preset threshold, performing the power-off operation.

38. The method according to claim 37, wherein the first preset threshold is smaller than the second preset threshold.

39. The method according to any one of claims 36 to 38, wherein the non-contact sensor(s) include at least one of:
an infrared sensor; a laser sensor; an ultrasonic sensor; a visual sensor; or a millimeter wave radar sensor.

40. The method according to claim 36, wherein:
the non-contact sensor(s) include a first sensor and a second sensor;
the first sensor is arranged at the first assembly or the second assembly, and the second sensor is arranged at the first assembly or the second assembly;
the first sensor is used to output a first sensing signal, and the second sensor is used to output a second sensing signal; and
performing the preset control operation according to the sensing signal includes:
performing the control operation according to the first sensing signal and/or the second sensing signal.

41. The method according to claim 40, wherein performing the control operation according to the first sensing signal and/or the second sensing signal includes at least one of:
performing the power-on operation when the first sensing signal is smaller than a third preset threshold or the second sensing signal is smaller than a fourth preset threshold; or
performing the power-off operation when the first sensing signal is larger than or equal to a fifth preset threshold and the second sensing signal is larger than or equal to a sixth preset threshold.

42. The method according to claim 41, wherein:
the third preset threshold is smaller than the fifth preset threshold; and/or
the fourth preset threshold is smaller than the sixth preset threshold.

43. The method according to claim 40, wherein:
the first sensor and/or the second sensor include a magnetic induction sensor, and the gimbal further includes sensing element(s) made of magnetic material; and
performing the preset control operation according to the sensing signal such that the gimbal is able to perform the corresponding response when the relative position of the first assembly and the second assembly changes, includes:
performing the control operation according to the first sensing signal and/or the second sensing signal such that the gimbal is able to perform the corresponding response when the relative position of the first sensor and/or the second sensor and the sensing element(s) changes.

44. The method according to claims 40 to 43, wherein the first sensor includes a Hall sensor, and the second sensor includes an anisotropic magnetoresistive AMR sensor.

45. The method according to claim 36, wherein when the gimbal performs the power-off operation, the non-contact sensor(s) remain powered on.

46. A control method of a gimbal, wherein:
the gimbal includes a base and a shaft arm assembly, the shaft arm assembly is connected to the base and is used to carry a load; the shaft arm assembly includes at least one shaft arm, and the shaft arm is able to rotate around at least one axial direction relative to the base to adjust the pose of the load;
the method includes:
obtaining a movement state of the base of the gimbal;
when the gimbal carries the load and the movement state of the base meets a first preset condition, entering a first photographing mode,
wherein:
the first preset condition includes that the pose of the base remains approximately unchanged; and
when the gimbal is in the first photographing mode, a target shaft arm of the shaft arm assembly does not stabilize the load, and the target shaft arm is able to rotate from a first joint angle to a second joint angle, with a first degree of freedom, when subjected to an external force and remain at the second joint angle.

47. The method according to claim 46, further comprising:
when the gimbal is in the first photographing mode, if the gimbal meets a second preset condition, performing a mode switching operation.

48. The method according to claim 47, wherein:
the second preset condition includes: that the movement state of the base of the gimbal does not satisfy the first preset condition, or that first information sent by the load is received, wherein the first information is used to instruct the gimbal to exit the first photographing mode; and
performing the mode switching operation includes: entering the second photographing mode, wherein, when the gimbal is in the second photographing mode, the target shaft arm stabilizes the load.

49. The method according to claim 48, wherein:
when the gimbal is in the second photographing mode, the target shaft arm is able to rotate from the third joint angle to the fourth joint angle, with the first degree of freedom, when subjected to an external force, and is able to remain at the fourth joint angle; and
the maximum rotation angle between the first joint angle and the second joint angle is larger than the maximum rotation angle between the third joint angle and the fourth joint angle.

50. The method according to claim 48, wherein entering the second photographing mode includes:
adjusting the joint angle of at least one of the shaft arms such that the shaft arm assembly is in a preset first pose.

51. The method according to claim 47, wherein:
the second preset condition includes that the gimbal is not carrying a load;
performing the mode switching operation includes:
entering a no-load mode;
wherein, when the gimbal is in the no-load mode, the target shaft arm is able to rotate from the fifth joint angle to the sixth joint angle, with the first degree of freedom, when subjected to an external force, and maintain at the sixth joint angle.

52. The method according to claim 51, wherein entering the no-load mode includes:
controlling the shaft arm assembly to maintain a second pose, wherein the second pose is the pose of the shaft arm assembly before the gimbal switches from the first photographing mode to the no-load mode.

53. The method according to claim 46, further comprising:
when the gimbal is controlled to switch from the first photographing mode to the second photographing mode, adjusting the joint angle of at least one of the shaft arms such that the shaft arm assembly is in a third pose, wherein the third pose is determined by the target pose information of the shaft arm assembly when the gimbal is in the second photographing mode.

54. The method according to any one of claim 46 to 53, wherein the first degree of freedom includes any one of:
a degree of freedom of rotation around a roll axis; a degree of freedom of rotation around a pitch axis; or a degree of freedom of rotation around a yaw axis.

55. The method according to any one of claims 48 to 52, wherein:
the second preset condition includes that the base is in a suspended state, and/or the shaft arm assembly is connected to the load and the moment of inertia corresponding to the load is smaller than a preset threshold; and
performing the mode switching operation includes:
entering a protection mode;
wherein, when the gimbal is in the protection mode, the motor of the target shaft arm stops outputting torque.

56. The method according to claim 46, wherein:
the shaft arm assembly is provided with an inertial measurement unit (IMU); and
obtaining the movement state of the base of the gimbal includes:
obtaining a sensing signal of the IMU, wherein the sensing signal is used to indicate the movement state of the shaft arm assembly; and
determining the movement state of the base based on the sensing signal.

57. The method according to any one of claims 46 to 53, wherein obtaining the movement state of the base of the gimbal includes:
obtaining the movement state of the base of the gimbal upon receiving second information sent by the load;
wherein the load sends the second information to the gimbal upon receiving input for entering the first photographing mode.

58. The method according to any one of claims 46 to 53, further comprising, after entering the first photographing mode:
receiving a first input; and
in response to the first input, controlling the load to perform a preset photographing operation;
wherein the preset photographing operation includes at least one of adjusting focal length; adjusting focus; or photographing.

59. The method according to any one of claims 46 to 53, further comprising, after entering the first photographing mode:
receiving a second input; and
in response to the second input, adjusting a joint angle of at least one of the shaft arms such that the shaft arm assembly is in a preset fourth pose.

60. A gimbal comprising a base and a shaft arm assembly, wherein:
the shaft arm assembly is connected to the base and is used to carry a load;
the shaft arm assembly includes at least one shaft arm, and the shaft arm is able to rotate around at least one axial direction relative to the base to adjust the pose of the load;
the gimbal also includes a memory and a processor;
the memory is used to store a computer program; and
the processor is used to execute the computer program to implement a control method according to any one of claims 46-59 when executing the computer program.

61. A control device of a gimbal, the gimbal including a first assembly and a second assembly mechanically coupled to each other, the device comprising a memory and a processor, wherein:
the memory is used to store a computer program; and
the processor is used to execute the computer program and, when executing the computer program, perform the control method according to any one of claims 36-45.

62. A control device of a gimbal, the gimbal including a first assembly and a second assembly mechanically coupled to each other, the device comprising a memory and a processor, wherein:
the memory is used to store a computer program; and
the processor is used to execute the computer program and, when executing the computer program, perform the control method according to any one of claims 46-59.
